# EUROPEAN PATENT APPLICATION

(11) **EP 4 760 836 A1**
(43) Date of publication of application: **17.06.2026**
(21) Application number: 24895511.4
(22) Date of filing: 31.05.2024
(51) Int. Cl.: H01M 10/04

(54) **TAB THREADING APPARATUS, ASSEMBLING DEVICE AND ASSEMBLING METHOD FOR BATTERY**

(30) Priority: 30.11.2023 CN 202311643341
(71) Applicant: Contemporary Amperex Technology Co., Limited, Ningde, Fujian 352100 (CN)
(72) Inventor: WU, Kai, Ningde, Fujian 352100 (CN); SUN, Weiwei, Ningde, Fujian 352100 (CN); ZHANG, Yongli, Ningde, Fujian 352100 (CN); YANG, Mukai, Ningde, Fujian 352100 (CN); TANG, Wenxiang, Ningde, Fujian 352100 (CN); FAN, Xiang, Ningde, Fujian 352100 (CN); PAN, Wensheng, Ningde, Fujian 352100 (CN)
(74) Representative: Lorenz Seidler Gossel Part. mbB
(86) International application number: PCT/CN2024/096834
(87) International publication number: WO 2025/112402

(57) **Abstract**

The present application discloses a tab-through device, assembly apparatus, and assembly method for a battery. The battery includes a housing and an electrode assembly. The housing is provided with an accommodation chamber, and a through hole is formed in the housing. The electrode assembly is arranged in the accommodation chamber. The tab-through device is configured to guide a tab part of the electrode assembly to extend out of the through hole. The tab-through device includes a clamping mechanism and a driving mechanism. The driving mechanism is configured to drive the clamping mechanism to clamp the tab part within the accommodation chamber to extend out of the accommodation chamber through the through hole. According to the above method, the present application can effectively reduce the assembly difficulty of the battery.

## Description

The present application claims priority to Chinese Patent Application No. 2023116433416, entitled "TAB-THROUGH DEVICE, ASSEMBLY APPARATUS, AND ASSEMBLY METHOD FOR BATTERY", filed on November 30, 2023, which is incorporated herein by reference in its entirety.

### TECHNICAL FIELD

The present application relates to the technical field of batteries, and in particular, to a tab-through device, assembly apparatus, and assembly method for a battery.

### BACKGROUND

A battery refers to a cup, trough, or other container-or part of the space within a composite container that contains an electrolyte solution and metal electrodes to generate an electric current; it is a device capable of converting chemical energy into electric energy. With the development of science and technology, batteries which offer advantages such as ease of carrying, simple and convenient charging/discharging operations, and long-term stable power supply have been widely applied in fields such as automobiles, household appliances, and aerospace.

The tab part of a battery is a metal conductor that leads the positive electrode and the negative electrode of the battery cell out of the housing; therefore, during the assembly process of the battery, the tab part of the battery needs to be led out of the housing to serve as the contact point for charging and discharging the battery. However, during the assembly process of the battery, when assembling the battery cell into the housing, the tab part is prone to bending inside the housing and cannot be extended out of the housing, which results in a higher difficulty in the battery assembly and manufacturing process and a lower yield rate of finished batteries.

### SUMMARY

In view of the above problems, the present application provides a tab-through device, assembly apparatus, and assembly method for a battery, such that the tab part can smoothly extend out of the housing, effectively reducing the assembly difficulty of the battery and effectively improving the assembly efficiency of the battery.

In a first aspect, the present application provides a tab-through device for a battery. The battery includes a housing and an electrode assembly. The housing is provided with an accommodation chamber, and a through hole that communicates the accommodation chamber with the outside is formed in the housing; the electrode assembly is arranged in the accommodation chamber. The tab-through device is configured to guide a tab part of the electrode assembly to extend out of the through hole. The tab-through device includes a clamping mechanism and a driving mechanism. The clamping mechanism is configured to clamp the tab part, and the driving mechanism is in transmission connection with the clamping mechanism for driving the clamping mechanism to move. The driving mechanism is configured to drive the clamping mechanism to clamp the tab part within the accommodation chamber to extend out of the accommodation chamber through the through hole.

According to the above method, through the arrangement of the clamping mechanism that can clamp the tab part and the arrangement of the driving mechanism in transmission connection with the clamping mechanism, it is possible, during the assembly process of the battery, when the housing is sleeved onto the electrode assembly, for the driving mechanism to drive the clamping mechanism to clamp the tab part. Without affecting or damaging the housing, the tab part can be guided smoothly into the through hole, enabling the tab part to smoothly extend out of the housing. As a result, the tab part is less likely to obstruct the housing from being sleeved onto the electrode assembly, and the tab part is also less likely to be damaged by collision with the housing or to fail to smoothly pass through the through hole. Thus, precise insertion of the electrode assembly into the housing is achieved, effectively enhancing the working stability and reliability of the tab-through device, effectively reducing the assembly difficulty of the battery, and effectively improving the assembly efficiency and the yield rate of the battery.

In some embodiments, the clamping mechanism includes a plurality of clamping plates, and the driving mechanism is in transmission connection with at least one clamping plate among the plurality of clamping plates for driving the at least one clamping plate to move. Additionally, the driving mechanism is configured to be capable of driving the plurality of clamping plates to clamp a circumference of the tab part to enable the tab part to extend out of the accommodation chamber, and configured to enable the plurality of clamping plates to release the circumference of the tab part to release the tab part.

According to the above method, by arranging the plurality of clamping plates to achieve the clamping of the tab part, the efficiency of clamping and releasing the tab part can be improved. Moreover, the clamping of the circumference of the tab part by the plurality of clamping plates can improve the stability of the clamping, thereby effectively enhancing the working reliability of the clamping mechanism.

In some embodiments, the plurality of clamping plates include a first clamping plate and a second clamping plate; the driving mechanism is configured to be capable of driving the first clamping plate and the second clamping plate to abut against and clamp both sides of the tab part in a thickness direction.

According to the above method, through the arrangement of the first clamping plate and the second clamping plate that can clamp both sides of the tab part in the thickness direction, the clamping of the tab part can be achieved without causing damage to the tab part, which is beneficial for enhancing the working reliability of the clamping mechanism.

In some embodiments, the driving mechanism is configured to drive at least one of the clamping plates to rotate to enable the plurality of clamping plates to jointly clamp or release the tab part.

According to the above method, by arranging the driving mechanism to drive at least one of the clamping plates to rotate so as to enable the plurality of clamping plates to jointly clamp or release the tab part, the difficulty of switching the clamping mechanism between clamping and releasing the tab part is effectively reduced, which is beneficial for improving the working efficiency of the tab-through device.

In some embodiments, the driving mechanism is configured to drive the first clamping plate and the second clamping plate to rotate; the first clamping plate is capable of rotating about a first rotation axis, and the second clamping plate is capable of rotating about a second rotation axis, with the first rotation axis and the second rotation axis arranged side by side. Alternatively, the driving mechanism is in transmission connection with the first clamping plate for driving the first clamping plate to rotate about a preset rotation axis; the second clamping plate is spaced apart from the preset rotation axis and is relatively fixed.

According to the above method, by arranging the first clamping plate and the second clamping plate that can rotate about the first rotation axis and the second rotation axis, respectively, or by arranging the first clamping plate that can rotate about the preset rotation axis and the relatively fixed second clamping plate, the first clamping plate and the second clamping plate can be staggered apart from each other before the clamping mechanism clamps the tab part, such that the tab part can enter the clamping range between the two clamping plates. It is thus convenient for the first clamping plate and/or the second clamping plate to rotate to both sides of the tab part in the thickness direction to abut against the tab part, thereby achieving the clamping of the tab part from both sides of the tab part. This makes the structure simple and the operation convenient, and it is unlikely to damage the tab part, which is beneficial for improving the clamping efficiency of the clamping mechanism and effectively enhancing the working reliability of the clamping assembly.

In some embodiments, the driving mechanism is configured to drive the first clamping plate and/or the second clamping plate to rotate to allow a relative position between the first clamping plate and the second clamping plate to switch between a clamping position and a releasing position; when in the clamping position, the first clamping plate and the second clamping plate at least partially overlap and abut each other in the thickness direction of the tab part, so as to clamp both sides of the tab part in the thickness direction; when in the releasing position, the abutment between the first clamping plate and the second clamping plate is released, so as to release the tab part.

According to the above method, when in the clamping position, the first clamping plate and the second clamping plate at least partially overlap to abut against both sides of the tab part in the thickness direction. As a result, the stability of clamping is improved while avoiding damage to the tab part, thereby effectively enhancing the working reliability of the clamping assembly.

In some embodiments, a first avoidance notch is formed in the first clamping plate, and a second avoidance notch is formed in the second clamping plate; when in the releasing position, the first avoidance notch and the second avoidance notch are arranged opposite to each other, and a spacing space is provided between the first avoidance notch and the second avoidance notch, with the first avoidance notch, the second avoidance notch, and the spacing space in communication with each other to form an avoidance space.

According to the above method, by forming the first avoidance notch, the second avoidance notch, and the spacing space in communication to form the avoidance space, it is beneficial for the tab part to smoothly enter the avoidance space when the first clamping plate and the second clamping plate are in the releasing position, thus avoiding interference between the first clamping plate and the second clamping plate that could cause damage. Additionally, the formation of the first avoidance notch and the second avoidance notch can reduce the required space occupied by the clamping mechanism while ensuring the size of the avoidance space, which is beneficial for improving space utilization and effectively enhances the working reliability of the clamping mechanism.

In some embodiments, the first clamping plate includes a first plate body and a first rotating part; the first rotating part is arranged in a protruding manner on an edge of one side of the first plate body, so as to form the first avoidance notch between the first rotating part and the first plate body, and the driving mechanism is in transmission connection with the first rotating part to drive the first rotating part to rotate about the first rotation axis. Additionally/alternatively, the second clamping plate includes a second plate body and a second rotating part; the second rotating part is arranged in a protruding manner on an edge of one side of the second plate body, so as to form the second avoidance notch between the second rotating part and the second plate body, and the driving mechanism is in transmission connection with the second rotating part to drive the second rotating part to rotate about the second rotation axis.

According to the above method, by arranging the first plate body and the first rotating part to form the first avoidance notch, and arranging the second plate body and the second rotating part to form the second avoidance notch, the tab part can be accommodated in the avoidance space when the first clamping plate and the second clamping plate are in the releasing position. When switched to the clamping position, the driving mechanism only needs to drive the first rotating part and the second rotating part to rotate so as to drive the first plate body and the second plate body to rotate, thereby achieving the clamping of the tab part. This makes the operation convenient and the structure simple, thereby effectively enhancing the clamping efficiency and working reliability of the clamping mechanism.

In some embodiments, rotational directions of the first clamping plate and the second clamping plate are the same; and/or, the first rotation axis and the second rotation axis are parallel to each other; and/or, the first rotation axis and the second rotation axis are arranged parallel to an axis of the through hole.

According to the above method, the mounting and positioning difficulty of the first clamping plate and the second clamping plate is effectively reduced, and it is beneficial for smoothly clamping and guiding the tab part to pass through the through hole, thereby effectively improving the clamping efficiency of the clamping mechanism and effectively enhancing the working reliability of the tab-through device.

In some embodiments, a ratio of a width of the first clamping plate in a direction perpendicular to the first rotation axis to a width of the second clamping plate in a direction perpendicular to the second rotation axis is 0.5 to 2. Additionally/alternatively, a length of the first clamping plate along the first rotation axis is the same as a length of the second clamping plate along the second rotation axis.

According to the above method, by appropriately setting the ratio of the width of the first clamping plate in the direction perpendicular to the first rotation axis to the width of the second clamping plate in the direction perpendicular to the second rotation axis, the clamping stability for the tab part is effectively improved while effectively ensuring the smooth operation of the clamping mechanism. This effectively reduces the possibility that the tab part cannot be stably and reliably clamped due to the ratio of the widths of the two clamping plates being too small or too large. Moreover, the appropriate setting of the lengths of the first clamping plate and the second clamping plate can effectively ensure the area of the overlapping portions between the two clamping plates in the clamping position, thereby effectively improving space utilization and providing effective and reliable clamping for the tab part.

In some embodiments, the first clamping plate and the second clamping plate are rotatably connected, and the first clamping plate and the second clamping plate are capable of rotating relative to each other about a same preset rotation axis; the driving mechanism is in transmission connection with the first clamping plate and/or the second clamping plate, so as to drive the first clamping plate and/or the second clamping plate to rotate about the preset rotation axis.

According to the above method, through the arrangement of the first clamping plate and the second clamping plate that rotate about the same preset rotation axis, it is possible to smoothly switch between the releasing position and the clamping position, which is beneficial for smoothly clamping and guiding the tab part to pass through the through hole, effectively improving the clamping efficiency of the clamping mechanism, and effectively improving the working reliability of the tab-through device.

In some embodiments, the tab-through device includes a transmission mechanism; the driving mechanism is in transmission connection with the transmission mechanism, and the transmission mechanism is in transmission connection with the first clamping plate and the second clamping plate.

According to the above method, the arrangement of the transmission mechanism achieves the transmission connection between the driving mechanism and the first clamping plate and the second clamping plate, which provides a basis for switching between the releasing position and the clamping position, thereby effectively enhancing the working reliability of the tab-through device.

In some embodiments, the transmission mechanism includes a first transmission rod that rotates about a first rotation axis and a second transmission rod that rotates about a second rotation axis. The first transmission rod is connected to the first clamping plate, and the second transmission rod is connected to the second clamping plate; the driving mechanism is in transmission connection with the first transmission rod and the second transmission rod for driving the first transmission rod to rotate about the first rotation axis and driving the second transmission rod to rotate about the second rotation axis.

According to the above method, through the arrangement of the first transmission rod and the second transmission rod, the driving mechanism can drive the first transmission rod and the second transmission rod to rotate, so as to respectively drive the first clamping plate and the second clamping plate to rotate, thereby enabling the first clamping plate and the second clamping plate to rotate about the first rotation axis and second rotation axis, respectively. This enables switching between the releasing position and the clamping position, thereby effectively enhancing the working reliability of the tab-through device.

In some embodiments, the transmission mechanism includes a linkage mechanism; the linkage mechanism is in transmission connection with the first transmission rod and the second transmission rod, the driving mechanism is in transmission connection with the linkage mechanism, and the driving mechanism is configured to drive, via the linkage mechanism, the first transmission rod and the second transmission rod to rotate.

According to the above method, by arranging the linkage mechanism to drive the first transmission rod and the second transmission rod to rotate, a smooth switching between the releasing position and the clamping position can be achieved, thereby facilitating the clamping of the tab part and effectively enhancing the working reliability of the tab-through device. Additionally, the linkage mechanism features a stable structure, convenient assembly and disassembly, and ease of mounting and maintenance.

In some embodiments, the linkage mechanism includes a base, a first link, a second link, and a third link. The first link, the second link, and the third link are arranged on one side of the base, and the third link is in transmission connection with the first link and the second link; the driving mechanism is configured to drive the third link to rotate; the first transmission rod and the second transmission rod pass through the base from the other side of the base and are in transmission connection with the first link and the second link, respectively.

According to the above method, by arranging the linkage mechanism to drive the first transmission rod and the second transmission rod to rotate, a smooth switching between the releasing position and the clamping position of the clamping mechanism can be achieved, thereby facilitating the clamping of the tab part and effectively enhancing the working reliability of the tab-through device. Additionally, the linkage mechanism features high carrying capacity and good impact resistance, which is beneficial for improving the service life of the tab-through device.

In some embodiments, the transmission mechanism includes an input shaft and a coupling, and the driving mechanism is provided with an output shaft; the input shaft and the output shaft are connected via the coupling, and the input shaft is in transmission connection with the linkage mechanism.

According to the above method, through the arrangement of the input shaft and the coupling, the power output by the output shaft of the driving mechanism is transmitted to the linkage mechanism via the coupling and the input shaft, which makes the operation convenient and the structure simple, and effectively enhances the working stability and reliability of the transmission mechanism.

In some embodiments, the transmission mechanism includes a gear mechanism; the gear mechanism is in transmission connection with the first transmission rod and the second transmission rod, the driving mechanism is in transmission connection with the gear mechanism, and the driving mechanism is configured to drive, via the gear mechanism, the first transmission rod and the second transmission rod to rotate.

According to the above method, by arranging the gear mechanism to drive the first transmission rod and the second transmission rod to rotate, a smooth switching between the releasing position and the clamping position of the clamping mechanism can be achieved, thereby facilitating the clamping of the tab part and effectively enhancing the working reliability of the tab-through device. Additionally, the gear mechanism features a stable structure, lower manufacturing cost, and convenient positioning, mounting, and disassembly, thereby effectively reducing the difficulty of mounting and maintenance.

In some embodiments, the gear mechanism includes a base, a main gear, a first driven gear, and a second driven gear. The main gear, the first driven gear, and the second driven gear are arranged on one side of the base, and the first driven gear and the second driven gear mesh with each other; the driving mechanism is configured to drive a first driving gear to rotate; the first transmission rod and the second transmission rod pass through the base from the other side of the base and are in transmission connection with the first driven gear and the second driven gear, respectively.

According to the above method, the driving mechanism drives the first main gear to rotate, such that the rotation of the first driven gear and the second driven gear can be achieved, thereby achieving the switching between the releasing position and the clamping position of the clamping mechanism. This makes the operation convenient, the structure simple, and the assembly and disassembly easy, and achieves high structural stability, which is beneficial for improving the service life of the gear mechanism and enhancing the working reliability of the tab-through device.

In some embodiments, the transmission mechanism includes an input shaft and a coupling, and the driving mechanism is provided with an output shaft; the input shaft and the output shaft are connected via the coupling, and the input shaft is in transmission connection with the gear mechanism.

According to the above method, through the arrangement of the input shaft and the coupling, the power output by the output shaft of the driving mechanism is transmitted to the gear mechanism via the coupling and the input shaft, which makes the operation convenient and the structure simple, and effectively enhances the working stability and reliability of the transmission mechanism.

In some embodiments, the tab-through device includes a flange seat, and the driving mechanism and the transmission mechanism are connected via the flange seat.

According to the above method, by arranging the flange seat to achieve the connection between the driving mechanism and the transmission mechanism, the connection stability between the driving mechanism and the transmission mechanism is effectively improved, which is beneficial for enhancing the working stability and reliability of the transmission mechanism.

In some embodiments, a process of sleeving the housing onto the electrode assembly includes a first stage; in the first stage, the clamping mechanism is configured to be capable of moving together with the housing relative to the electrode assembly, so as to clamp the tab part in the first stage.

According to the above method, the clamping mechanism moves together with the housing relative to the electrode assembly in the first stage, such that the clamping mechanism can approach the tab part as the electrode assembly is gradually inserted into the housing, thereby facilitating the clamping of the tab part in the first stage. This enables smooth and efficient clamping of the tab part, effectively improving the clamping efficiency of the clamping mechanism and the assembly efficiency of the battery.

In some embodiments, the process of sleeving the housing onto the electrode assembly includes a second stage following the first stage; in the second stage, the clamping mechanism is configured to be capable of moving relative to the housing in directions away from each other while maintaining a clamping on the tab part, thereby clamping the tab part to extend out of the accommodation chamber through the through hole.

According to the above method, in the second stage, the clamping mechanism moves relative to the housing in directions away from each other and maintains the clamping on the tab part, such that the tab part can be guided to pass through the through hole as the electrode assembly is further inserted into the housing. This makes the assembly process smooth and clear, effectively improving the efficiency of the tab part passing through the through hole and the assembly efficiency of the battery.

In a second aspect, the present application provides an assembly apparatus for a battery. The assembly apparatus includes a housing-insertion device and the tab-through device described above. The housing-insertion device is configured to assemble the electrode assembly into the housing from an open end of the housing. The housing-insertion device includes a housing fixing mechanism and a carrying assembly, the housing fixing mechanism is configured to fix the housing, and the carrying assembly is configured to carry the electrode assembly. The housing fixing mechanism and the tab-through device are configured to be capable of moving up and down relative to the carrying assembly, so as to correspond to moving away from or toward the carrying assembly; the tab-through device is configured to pass through the through hole into the accommodation chamber before clamping the tab part; the housing fixing mechanism is configured to sleeve the housing onto the electrode assembly; the driving mechanism is configured to drive the clamping mechanism to clamp the tab part within the accommodation chamber and to drive the clamping mechanism to guide the tab part to extend out of the accommodation chamber through the through hole.

According to the above method, when sleeving the housing of the battery onto the electrode assembly, the tab part of the battery can be smoothly guided to extend out of the accommodation chamber through the through hole, enabling the tab part to smoothly extend out of the housing. As a result, the tab part is less likely to obstruct the housing from being sleeved onto the electrode assembly, and the tab part is also less likely to be damaged by collision with the housing or to fail to smoothly pass through the through hole. Thus, precise insertion of the electrode assembly into the housing is achieved, effectively enhancing the working stability and reliability of the tab-through device, effectively reducing the assembly difficulty of the battery, and effectively improving the assembly efficiency and the yield rate of the battery.

In a third aspect, the present application provides an assembly method for a battery. The battery includes a housing and an electrode assembly. The housing is provided with an accommodation chamber and a through hole that communicates the accommodation chamber with the outside, the electrode assembly is arranged in the accommodation chamber, and a tab part of the electrode assembly extends out of the through hole. The assembly method includes: controlling a clamping mechanism to pass through the through hole and extend into the accommodation chamber, and controlling the housing to sleeve onto the electrode assembly; and controlling, during the process of sleeving the housing onto the electrode assembly, the driving mechanism to drive the clamping mechanism to clamp the tab part within the accommodation chamber and to drive the clamping mechanism to guide the tab part to extend out of the accommodation chamber through the through hole.

According to the above method, the tab part of the battery can be smoothly guided to pass through the through hole, such that the tab part is less likely to obstruct the housing from being sleeved onto the electrode assembly, and the tab part is also less likely to be damaged by collision with the housing or fail to smoothly pass through the through hole. Thus, precise insertion of the electrode assembly into the housing is achieved. Additionally, the tab part is guided to pass through the through hole as the housing is sleeved onto the electrode assembly, thereby effectively enhancing the working stability and reliability of the tab-through device, effectively reducing the assembly difficulty of the battery, and effectively improving the assembly efficiency and the yield rate of the battery.

In some embodiments, controlling the driving mechanism to drive the clamping mechanism to clamp the tab part and to drive the clamping mechanism to guide the tab part to extend out of the accommodation chamber through the through hole includes: in a first stage, controlling the clamping mechanism to move together with the housing relative to the electrode assembly, so as to clamp the tab part in the first stage; and in a second stage, controlling the clamping mechanism to move relative to the housing in directions away from each other while maintaining a clamping on the tab part, thereby clamping the tab part to extend out of the accommodation chamber through the through hole.

According to the above method, in the first stage, the clamping mechanism moves together with the housing relative to the electrode assembly, such that the clamping mechanism can clamp the tab part as the electrode assembly is gradually inserted into the housing, thereby enabling smooth and efficient clamping of the tab part. In the second stage, the clamping mechanism moves relative to the housing in directions away from each other and maintains the clamping on the tab part, such that the tab part can be guided to pass through the through hole as the electrode assembly is further inserted into the housing. This makes the assembly process smooth and clear, effectively improving the efficiency of the tab part passing through the through hole and the assembly efficiency of the battery.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural diagram of a vehicle according to one or more embodiments;
FIG. 2 is a schematic diagram of an exploded structure of a battery according to one or more embodiments;
FIG. 3 is a schematic diagram of an exploded structure of a power supply battery according to one or more embodiments;
FIG. 4 is a schematic structural diagram of an assembly apparatus according to one or more embodiments;
FIG. 5 is a schematic structural diagram of a battery assembly system according to one or more embodiments;
FIG. 6 is a schematic structural diagram of a tab-through device according to one or more embodiments;
FIG. 7 is a front view schematic diagram of the tab-through device shown in FIG. 6 in a clamping position;
FIG. 8 is a front view schematic diagram of the tab-through device shown in FIG. 6 in a releasing position;
FIG. 9 is another front view schematic diagram of the tab-through device shown in FIG. 6 in a releasing position;
FIG. 10 is a schematic diagram of an application scenario of a linkage mechanism shown in FIG. 7;
FIG. 11 is another schematic diagram of an application scenario of the linkage mechanism shown in FIG. 7;
FIG. 12 is a schematic diagram of an exploded structure of a tab-through device according to one or more embodiments;
FIG. 13 is a schematic diagram of an application scenario of a transmission mechanism shown in FIG. 6; and
FIG. 14 is a schematic flowchart of an embodiment of an assembly method for a battery according to the present application.

Reference numerals in the detailed description are as follows:
1000a vehicle;
100a power supply battery; 200a controller; 300a motor;
10a case; 11a first portion; 12a second portion;
F1 preset assembly direction; F2 direction perpendicular to first rotation axis; F3 direction perpendicular to second rotation axis; F4 thickness direction of the tab part; L1 first rotation axis; L2 second rotation axis; L3 preset rotation axis;
1 battery; 10 housing; 11 accommodation chamber; 12 open end; 13 top part; 14 through hole; 15 post terminal; 20 electrode assembly; 21 tab part; 30 bottom cover; 2 tab-through device; 201 avoidance space; 202 first avoidance notch; 203 second avoidance notch; 204 spacing space; 100 clamping mechanism; 110 first clamping plate; 111 first plate body; 112 first rotating part; 120 second clamping plate; 121 second plate body; 122 second rotating part; 130 clamping plate; 200 driving mechanism; 210 output shaft; 300 transmission mechanism; 310 first transmission rod; 320 second transmission rod; 330 linkage mechanism; 331 first link; 332 second link; 333 third link; 340 input shaft; 350 coupling; 360 gear mechanism; 361 first driven gear; 362 second driven gear; 363 main gear; 370 base; 400 flange seat; 3 assembly apparatus; 40 housing-insertion device; 41 housing fixing mechanism; 42 carrying assembly; 50 tab welding device; 60 post terminal welding device; 70 bottom cover welding device; 80 pairing device; 4 conveying apparatus; 5 battery assembly system.

### DETAILED DESCRIPTION

The technical solutions in the embodiments of the present application will be clearly and completely described hereinafter with reference to the drawings in the embodiments of the present application. It is apparent that the described embodiments are only some, but not all, embodiments of the present application. All other embodiments obtained by those of ordinary skill in the art without creative efforts with respect to the embodiments in the present application shall fall within the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

With the development of battery technology, batteries have been applied in an increasing number of fields and are gradually replacing traditional fossil energy in the automotive power sector. A battery can store chemical energy and can controllably convert the chemical energy into electric energy. In rechargeable batteries, after discharge, the active substance can be activated through charging for continued use.

A battery refers to a cup, trough, or other container-or part of the space within a composite container that contains an electrolyte solution and metal electrodes to generate an electric current; it is a device capable of converting chemical energy into electric energy. With the development of science and technology, batteries which offer advantages such as ease of carrying, simple and convenient charging/discharging operations, and long-term stable power supply-have been widely applied in fields such as automobiles, household appliances, and aerospace.

The tab part of a battery is a metal conductor that leads the positive electrode and the negative electrode of the battery cell out of the housing; therefore, during the assembly process of the battery, the tab part of the battery needs to be led out of the housing to serve as the contact point for charging and discharging the battery. However, during the assembly process of the battery, when assembling the battery cell into the housing, the tab part is prone to bending inside the housing and cannot be extended out of the housing, making it difficult to smoothly complete the assembly between the battery cell and the housing. As a result, the assembly and manufacturing process of the battery becomes more difficult, and the yield rate of finished batteries becomes lower.

To achieve precise insertion of the electrode assembly into the housing and to smoothly extend the tab part from inside the housing to the outside, the tab part can be guided during the insertion of the electrode assembly into the housing, such that the tab part is smoothly extended from inside the housing to the outside.

Based on the above considerations, the present application provides a tab-through device, assembly apparatus, and assembly method for a battery. The battery includes a housing and an electrode assembly. The housing is provided with an accommodation chamber, and a through hole that communicates the accommodation chamber with the outside is formed in the housing. The electrode assembly is arranged in the accommodation chamber. The tab-through device is configured to guide the tab part of the electrode assembly to extend out of the through hole. The tab-through device includes a clamping mechanism and a driving mechanism. The clamping mechanism is configured to clamp the tab part, and the driving mechanism is in transmission connection with the clamping mechanism for driving the clamping mechanism to move. The driving mechanism is configured to drive the clamping mechanism to clamp the tab part within the accommodation chamber to extend out of the accommodation chamber through the through hole. In this way, without affecting or damaging the housing, the tab part can be guided smoothly into the through hole, enabling the tab part to smoothly extend out of the housing. As a result, the tab part is less likely to obstruct the housing from being sleeved onto the electrode assembly, and the tab part is also less likely to be damaged by collision with the housing or to fail to smoothly pass through the through hole. Thus, precise insertion of the electrode assembly into the housing is achieved, effectively enhancing the working stability and reliability of the tab-through device, effectively reducing the assembly difficulty of the battery, and effectively improving the assembly efficiency and the yield rate of the battery.

The battery disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000a as an example of the electric device according to an embodiment of the present application.

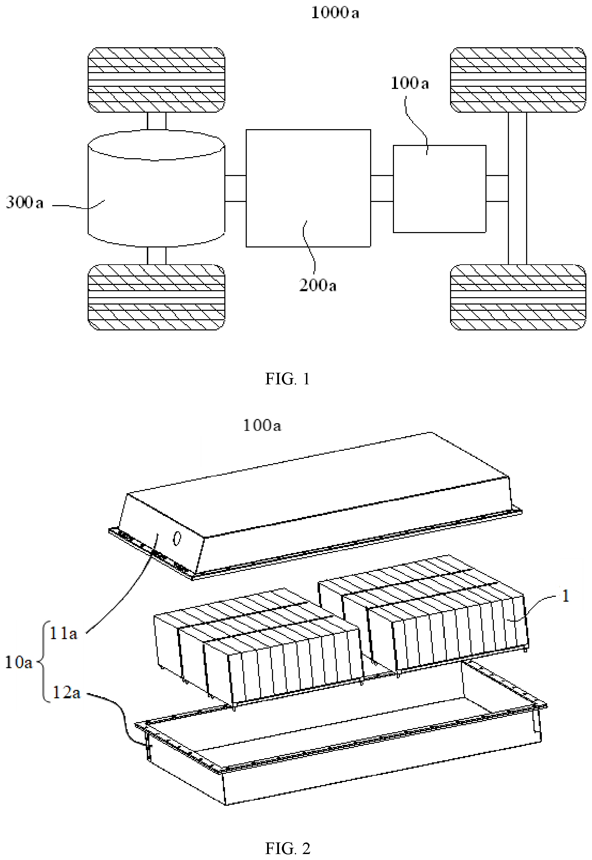

Referring to FIG. 1, a vehicle 1000a may be a fuel vehicle, a gas vehicle, or a new energy vehicle. The new energy vehicle may be a pure electric vehicle, a hybrid vehicle, an extended-range vehicle, or the like. A power supply battery 100a is arranged inside the vehicle 1000a, and the power supply battery 100a may be arranged at the bottom, head, or tail of the vehicle 1000a. The power supply battery 100a may be configured to power the vehicle 1000a. For example, the power supply battery 100a may serve as an operation power source for the vehicle 1000a. The vehicle 1000a may further include a controller 200a and a motor 300a. The controller 200a is configured to control the power supply battery 100a to supply power to the motor 300a, e.g., for the operation power needed by the vehicle 1000a for start-up, navigation, and driving.

In some embodiments of the present application, the power supply battery 100a may not only serve as an operation power source for the vehicle 1000a, but also as a driving power source for the vehicle 1000a, replacing or partially replacing fuel or natural gas, to provide driving power for the vehicle 1000a.

In some embodiments, the power supply battery 100a may be an energy storage device. The energy storage device includes an energy storage container, an energy storage electrical cabinet, and the like.

The power supply battery 100a mentioned in the embodiments of the present application refers to a single physical module including one or a plurality of batteries 1 to provide higher voltage and capacity.

In the embodiments of the present application, the battery 1 may be a secondary battery, which refers to a battery that may be continuously used by activating the active material by charging after the battery discharges. Each battery 1 may also be a primary battery.

The battery 1 includes, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, or a lead storage battery. The battery 1 may be cylindrical, flat, rectangular parallelepiped, or in other shapes.

In some embodiments, the power supply battery 100a may be a battery module, and when a plurality of batteries 1 are provided, the plurality of batteries 1 are arranged and fixed to form one battery module.

In some embodiments, referring to FIG. 2, the power supply battery 100a may be a battery pack. The battery pack includes a case 10a and a battery 1, and the battery 1 or the battery module is accommodated in the case 10a.

In some embodiments, the case 10a may be a portion of the chassis structure of the vehicle 1000a. For example, a portion of the case 10a may become at least a portion of the floor of the vehicle 1000a, or a portion of the case 10a may become at least a portion of a transverse beam and a longitudinal beam of the vehicle 1000a.

Referring to FIG. 2, the power supply battery 100a includes a case 10a and a battery 1, and the battery 1 is accommodated within the case 10a. The case 10a is configured to provide an accommodating space for the battery 1, and the case 10a may be of a variety of structures. In some embodiments, the case 10a may include a first portion 11a and a second portion 12a. The first portion 11a and the second portion 12a are mutually lidded onto each other, and the first portion 11a and the second portion 12a jointly define an accommodating space for accommodating the battery 1. The second portion 12a may be of a hollow structure with one end open, and the first portion 11a may be of a plate-shaped structure. The first portion 11a is lidded onto the open side of the second portion 12a, such that the first portion 11a and the second portion 12a jointly define the accommodating space. The first portion 11a and the second portion 12a may also each be of a hollow structure with one side open, and the open side of the first portion 11a is lidded onto the open side of the second portion 12a. Certainly, the case 10a formed by the first portion 11a and the second portion 12a may be in various shapes, such as cylindrical and rectangular parallelepiped.

In the power supply battery 100a, there may be a plurality of batteries 1, and the plurality of batteries 1 may be connected in series, in parallel, or in series-parallel. The series-parallel connection means that both series connection and parallel connection are present for the connection among the plurality of batteries 1. The plurality of batteries 1 may be directly connected in series, in parallel, or in series-parallel, and then the whole formed by the plurality of batteries 1 is accommodated in the case 10a. Certainly, the situation may also be that in the power supply battery 100a, a plurality of batteries 1 are first connected in series, in parallel, or in series-parallel to form battery modules, and then the plurality of battery modules are connected in series, in parallel, or in series-parallel to form a whole and accommodated in the case 10a. The power supply battery 100a may further include other structures. For example, the power supply battery 100a may further include a busbar component for achieving the electrical connection among the plurality of batteries 1.

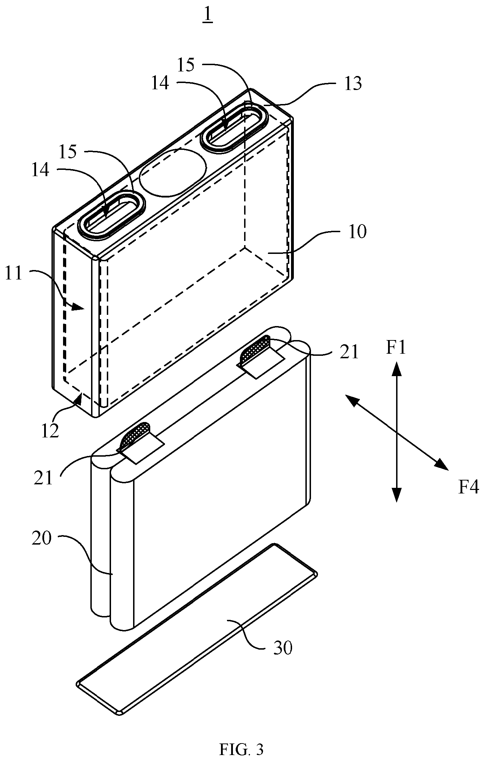

Referring to FIG. 3, the battery 1 refers to the smallest unit constituting the battery. As shown in FIG. 3, the battery 1 includes a housing 10, an electrode assembly 20, and other functional components.

In some embodiments, the housing 10 is configured to encapsulate the electrode assembly 20, the electrolyte, and other components. The housing 10 may be a steel housing, an aluminum housing, a plastic housing (such as polypropylene), a composite metal housing (such as a copper-aluminum composite housing), an aluminum-plastic film, or the like.

The battery 1 may include a bottom cover 30. The bottom cover 30 refers to a component that is lidded onto the opening of the housing 10 to isolate the internal environment of the battery 1 from the external environment. Without limitation, the shape of the bottom cover 30 may be adapted to the shape of the housing 10 to match the housing 10. Optionally, the bottom cover 30 may be made of a material with a certain hardness and strength (for example, an aluminum alloy), such that the bottom cover 30 is not easily deformed when being squeezed or collided. This enables the battery 1 to have higher structural strength, and the safety performance can also be improved. The bottom cover 30 may also be made of various materials, for example, including but not limited to copper, iron, aluminum, stainless steel, aluminum alloy, and plastic. In some embodiments, an insulating component may also be provided on the inner side of the bottom cover 30, and the insulating component may be configured to isolate an electrical connection component in the housing 10 from the bottom cover 30 to reduce the risk of a short circuit. Illustratively, the insulating component may be made of plastic, rubber, or the like.

The housing 10 is an assembly configured in conjunction with the bottom cover 30 to form the internal environment of the battery 1. The formed internal environment can be used to accommodate the electrode assembly 20, the electrolytic solution, and other components. The housing 10 and the bottom cover 30 may be independent components. An open end 12 may be formed in the housing 10, and the bottom cover 30 is lidded onto the open end 12 to form the internal environment of the battery 1. Without limitation, the bottom cover 30 and the housing 10 may be integrated. Specifically, the bottom cover 30 and the housing 10 may form a common connection surface before other components are placed in the housing, and when the interior of the housing 10 needs to be encapsulated, the bottom cover 30 is lidded onto the housing 10. The housing 10 may be in various shapes and sizes, such as a rectangular parallelepiped, a cylinder, and a hexagonal prism. Specifically, the shape of the housing 10 may be determined according to the specific shape and size of the electrode assembly 20. The housing 10 may be made of various materials, for example, including but not limited to copper, iron, aluminum, stainless steel, aluminum alloy, and plastic. Functional components, such as electrode terminals, may be arranged on the housing 10. The electrode terminals may be configured to electrically connect with the electrode assembly 20 for outputting or inputting electric energy of the battery 1. In some embodiments, the housing 10 may also be provided with a pressure relief mechanism for releasing the internal pressure when the internal pressure or temperature of the battery 1 reaches a threshold.

The electrode assembly 20 is a component where the electrochemical reaction occurs in the battery 1. One or more electrode assemblies 20 may be accommodated in the housing 10.

In some embodiments, the electrode assembly 20 includes a positive electrode, a negative electrode, and a separator. During the charging and discharging process of the battery 1, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in a thickness direction thereof, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO4 (also referred to as LFP)), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn2O₄), a lithium nickel cobalt oxide, a lithium manganese cobalt oxide, a lithium nickel manganese oxide, a lithium nickel cobalt manganese oxide (such as LiNi₃Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector has two surfaces opposite to each other in a thickness direction thereof, and the negative electrode active material is disposed on either or both of the two opposite surfaces of the negative electrode current collector.

As an example, the negative electrode active material may be a negative electrode active material known in the art for use in batteries. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly 20 further includes a separator disposed between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene difluoride, and ceramic. The separation film may be a single-layer film or a multi-layer composite film, and there is no particular limitation on this. When the separation film is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery 1 further includes an electrolyte that serves to conduct ions between the positive electrode and the negative electrode. The present application has no specific limitations on the type of the electrolyte, which can be selected according to needs. The electrolyte may be liquid-state, gel-state, or solid-state.

The liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly 20 is of a wound structure. The positive electrode plate and the negative electrode plate are wound to form a wound structure.

In some embodiments, the electrode assembly 20 is provided with a tab part 21, and the tab part 21 can conduct current out from the electrode assembly 20. The tab part 21 includes a positive electrode tab and a negative electrode tab. The positive electrode tab and the negative electrode tab may be located together at one end of the main body part or separately at two ends of the main body part. During the charging and discharging process of the power supply battery 100a, the positive electrode active substance and the negative electrode active substance react with the electrolytic solution, and the tab part 21 is connected to the electrode terminal to form a current circuit.

According to some embodiments of the present application, as shown in FIG. 3, the battery 1 may include a housing 10 and an electrode assembly 20. The housing 10 may be provided with an accommodation chamber 11 and an open end 12 that communicates with the accommodation chamber 11. The housing 10 is further provided with a top part 13 arranged opposite to the open end 12. Through holes 14 that communicate the accommodation chamber 11 with the outside may be formed in the top part 13. One end of the electrode assembly 20 may be provided with tab parts 21. The housing 10 is configured to sleeve the electrode assembly 20 via the open end 12 along a preset assembly direction F1, such that the electrode assembly 20 is accommodated within the accommodation chamber 11, and the tab parts 21 pass through the through holes 14 and extend out of the through holes 14.

Optionally, as shown in FIG. 3, the housing 10 may include post terminals 15. The post terminal 15 may be arranged on the top part 13 of the housing 10, and the through hole 14 may be formed in the post terminal 15. The active substance-coated part of the electrode assembly 20 is arranged within the housing 10, and the tab part 21 of the electrode assembly 20 may pass through the through hole 14 to connect to one side of the post terminal 15 facing away from the accommodation chamber 11, thereby outputting electric energy from the electrode assembly 20 to the outside of the battery 1. The housing 10 may accommodate the electrode assembly 20 by sleeving the electrode assembly 20 through the open end 12.

Optionally, as shown in FIG. 3, the battery 1 may further include a bottom cover 30. The bottom cover 30 is configured to cover the open end 12, such that the electrode assembly 20 is not prone to falling out from the open end 12 after being inserted into the housing.

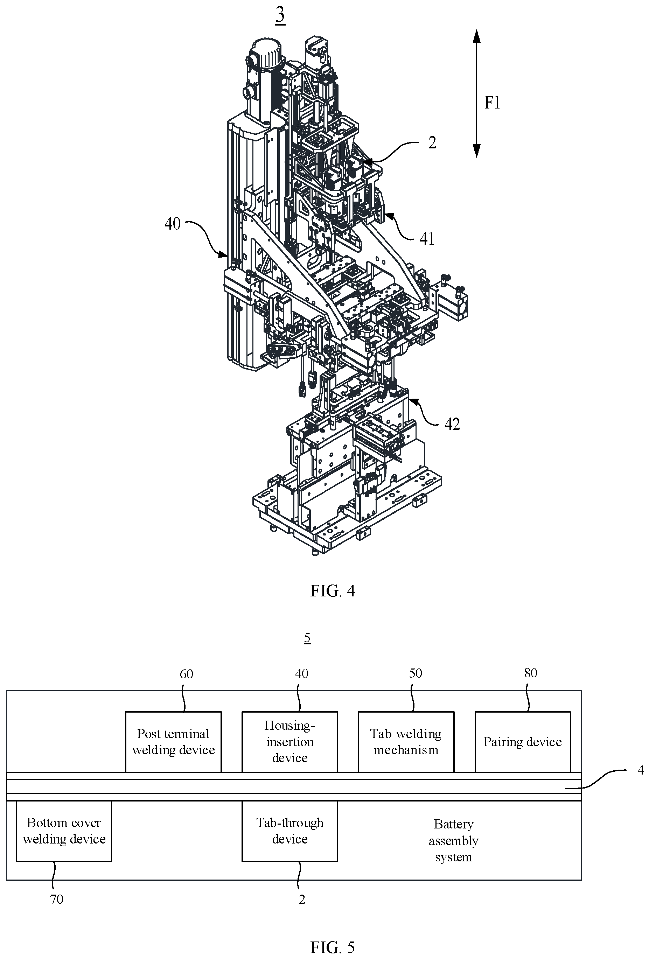

According to some embodiments of the present application, optionally, as shown in FIG. 4, the assembly apparatus 3 includes a housing-insertion device 40 and a tab-through device 2. The housing-insertion device 40 is configured to assemble the electrode assembly 20 into the housing 10 through the open end 12 of the housing 10. The housing-insertion device 40 includes a housing fixing mechanism 41 and a carrying assembly 42. The housing fixing mechanism 41 is configured to fix the housing 10; the carrying assembly 42, along the preset assembly direction F1, is located below the housing fixing mechanism 41 and the tab-through device 2, and is configured to carry the electrode assembly 20.

Optionally, the electrode assembly 20 and the bottom cover 30 may be sequentially stacked on the carrying assembly 42 according to the preset assembly direction F1, such that after the electrode assembly 20 is inserted into the housing, the bottom cover 30 can cover the open end 12. The carrying assembly 42 may also further fix the electrode assembly 20 and the bottom cover 30 to reduce the occurrence of displacement of the electrode assembly 20 during transportation or the housing insertion process.

The housing fixing mechanism 41 and the tab-through device 2 are configured to be capable of moving up and down relative to the carrying assembly 42 along the preset assembly direction F1, so as to correspond to moving away from or toward the carrying assembly 42. Before clamping the tab part 21, the tab-through device 2 is configured to be capable of passing through the through hole 14 into the accommodation chamber 11, and the housing fixing mechanism 41 is configured to sleeve the housing 10 onto the electrode assembly 20 during the downward movement. During the process of sleeving the housing 10 onto the electrode assembly 20, the tab-through device 2 can guide the tab part 21 to extend out of the accommodation chamber 11 through the through hole 14.

Furthermore, the process of sleeving the housing 10 onto the electrode assembly 20 includes a first stage and a second stage arranged in sequential order. In the first stage, the housing fixing mechanism 41 and the tab-through device 2 are configured to be capable of moving down together relative to the carrying assembly 42 along a preset assembly direction F1, such that the tab-through device 2 can contact the tab part 21 within the accommodation chamber 11. In the second stage, the housing fixing mechanism 41 is configured to be capable of moving down relative to the tab-through device 2 along the preset assembly direction F1, such that the tab-through device 2 guides the tab part 21 to extend out of the accommodation chamber 11 through the through hole 14. Prior to the first stage, the tab-through device 2 is configured to be capable of moving down relative to the housing fixing mechanism 41 along the preset assembly direction F1, such that the tab-through device passes through the through hole 14 from the side of the top part 13 into the accommodation chamber 11, and, during the first stage, moves down together with the housing fixing mechanism 41 relative to the carrying assembly 42.

According to the above method, when sleeving the housing 10 of the battery 1 onto the electrode assembly 20, the tab part 21 of the battery 1 can be smoothly guided to extend out of the accommodation chamber 11 through the through hole 14, enabling the tab part 21 to smoothly extend out of the housing 10. As a result, the tab part 21 is less likely to obstruct the housing 10 from being sleeved onto the electrode assembly 20, and the tab part 21 is also less likely to be damaged by collision with the housing 10 or to fail to smoothly pass through the through hole 14. Thus, precise insertion of the electrode assembly 20 into the housing is achieved, effectively enhancing the working stability and reliability of the tab-through device 2, effectively reducing the assembly difficulty of the battery 1, and effectively improving the assembly efficiency and the yield rate of the battery 1.

Optionally, as shown in FIG. 5, in some embodiments, the assembly apparatus 3 includes a tab welding device 50, a post terminal welding device 60, and a bottom cover welding device 70. The tab welding device 50 is configured to weld a plurality of tab plates of the electrode assembly 20 to form the tab part 21; the post terminal welding device 60 is configured to weld the tab part 21, which passes through the through hole 14, to one side of the post terminal 15 of the housing 10 that faces away from the accommodation chamber 11; and the bottom cover welding device 70 is configured to weld the bottom cover 30 to the open end 12 of the housing 10.

According to the above method, the arrangement of the tab welding device 50, the post terminal welding device 60, and the bottom cover welding device 70 enables the assembly apparatus 3 to realize the formation of the tab part 21, the connection between the tab part 21 and the post terminal 15, and the connection between the bottom cover 30 and the housing 10. This is beneficial for enhancing the connection stability of each structural part of the battery 1 and enhancing the working stability and reliability of the battery 1.

It should be noted that, in this embodiment, structures to be assembled can be conveyed by the conveying apparatus 4 among the stations of the assembly apparatus 3. The conveying apparatus 4 and the assembly apparatus 3 together form the battery assembly system 5. The conveying apparatus 4 includes a conveyor line, which may be a conveying structure formed by conveyor rollers driven by a motor together with a conveyor belt, a conveying structure formed by conveyor chain links driven by a motor and hinged together, or an AGV conveying cart. This conveyor line can realize conveying in at least one direction and can support and ensure the stability of the structure to be assembled.

The purpose of the tab welding device 50 is to enable the formation of the tab part 21 after the pre-welding of the tab plates. The tab welding device may optionally be an ultrasonic welding apparatus, which can ensure that the tab plates are welded under a stable clamped state. The purpose of the post terminal welding device 60 is to realize the welding between the tab part 21 and the pole terminal 15. The post terminal welding device may optionally be a laser welding apparatus. The purpose of the bottom cover welding device 70 is to realize circumferential edge welding of the bottom cover 30 and the open end 12 of the housing 10. The bottom cover welding device is also a laser welding apparatus.

In addition, the assembly apparatus 3 is not limited to including the tab welding device 50, the housing-insertion device 40, the tab-through device 2, the post terminal welding device 60, and the bottom cover welding device 70. Illustratively, when there are a plurality of electrode assemblies 20, for example, when there are two electrode assemblies, the assembly apparatus 3 further includes a pairing device 80. The pairing device 80 is configured to arrange the plurality of electrode assemblies 20 in a stacking manner, such that the tab plates of the two electrode assemblies 20 are approximately opposite. This facilitates the conveying structure in conveying the paired electrode assemblies 20 to the tab welding device 50 for welding of the tab plates, thus facilitating the formation of the tab part 21. Further illustratively, to ensure reliability in the battery assembly process, dust removal stations, NG detection stations, etc., may be added between any two adjacent stations, which is not limited in this embodiment.

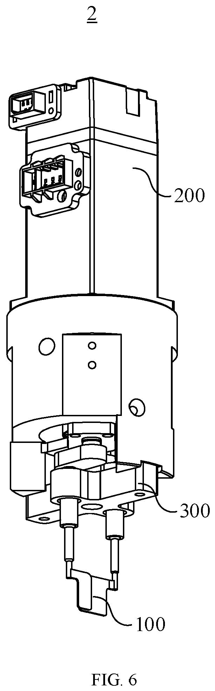

According to some embodiments of the present application, as shown in FIG. 6, the tab-through device 2 includes a clamping mechanism 100 and a driving mechanism 200. The clamping mechanism 100 is configured to clamp the tab part 21, and the driving mechanism 200 is in transmission connection with the clamping mechanism 100.

The clamping mechanism 100 is configured to clamp the tab part 21, and the driving mechanism 200 is in transmission connection with the clamping mechanism 100 for driving the clamping mechanism 100 to move. The driving mechanism 200 is configured to drive the clamping mechanism 100 to clamp the tab part 21 within the accommodation chamber 11 to extend out of the accommodation chamber 11 through the through hole 14.

Optionally, before clamping the tab part 21, the clamping mechanism 100 is configured to pass through the through hole 14 and extend into the accommodation chamber 11. During the process of sleeving the housing 10 onto the electrode assembly 20, the driving mechanism 200 is configured to drive the clamping mechanism 100 to clamp the tab part 21 within the accommodation chamber 11 and drive the clamping mechanism 100 to guide the tab part 21 to extend out of the accommodation chamber 11 through the through hole 14. The driving mechanism 200 may include a motor, which provides power for the clamping mechanism 100 to clamp the tab part 21. The motor may be a direct current motor or an alternating current motor.

According to the above method, through the arrangement of the clamping mechanism 100 that can clamp the tab part 21 and the arrangement of the driving mechanism 200 in transmission connection with the clamping mechanism 100, it is possible, during the assembly process of the battery 1, when the housing 10 is sleeved onto the electrode assembly 20 through the open end 12, for the driving mechanism 200 to drive the clamping mechanism 100 to clamp the tab part 21. Without affecting or damaging the housing 10, the tab part 21 can be guided smoothly into the through hole 14, enabling the tab part 21 to smoothly extend out of the housing 10. As a result, the tab part 21 is less likely to obstruct the housing 10 from being sleeved onto the electrode assembly 20, and the tab part 21 is also less likely to be damaged by collision with the housing 10 or to fail to smoothly pass through the through hole 14. Thus, precise insertion of the electrode assembly 20 into the housing is achieved, effectively enhancing the working stability and reliability of the tab-through device 2, effectively reducing the assembly difficulty of the battery 1, and effectively improving the assembly efficiency and the yield rate of the battery 1.

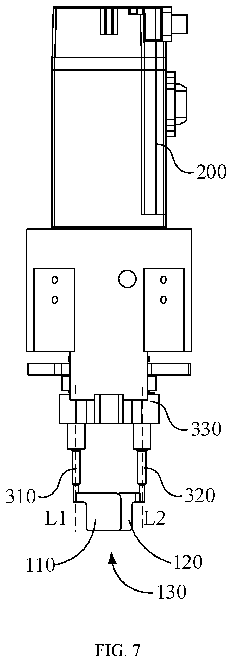

According to some embodiments of the present application, optionally, as shown in FIG. 7, the clamping mechanism 100 includes a plurality of clamping plates 130, and the driving mechanism 200 is in transmission connection with at least one clamping plate among the plurality of clamping plates 130 for driving the at least one clamping plate 130 to move. Optionally, the driving mechanism 200 is configured to be capable of driving the plurality of clamping plates 130 to clamp the circumference of the tab part 21 to enable the tab part 21 to extend out of the accommodation chamber 11, and configured to enable the plurality of clamping plates 130 to release the circumference of the tab part 21 to release the tab part 21.

According to the above method, by arranging the plurality of clamping plates 130 to achieve the clamping of the tab part 21, the efficiency of clamping and releasing the tab part 21 can be improved. Moreover, the clamping of the circumference of the tab part 21 by the plurality of clamping plates 130 can improve the stability of the clamping, thereby effectively enhancing the working reliability of the clamping mechanism 100.

According to some embodiments of the present application, optionally, as shown in FIGs. 3 and 7, the plurality of clamping plates 130 include a first clamping plate 110 and a second clamping plate 120. The driving mechanism 200 is configured to be capable of driving the first clamping plate 110 and the second clamping plate 120 to abut against and clamp both sides of the tab part 21 in the thickness direction F4.

According to the above method, through the arrangement of the first clamping plate 110 and the second clamping plate 120, which can clamp both sides of the tab part 21 in the thickness direction F4-where the both sides in the thickness direction F4 of the tab part 21 are the two side surfaces with a larger area the contact area between the first clamping plate 110 and the second clamping plate 120 and the tab part 21 when clamping the tab part 21 is increased. As a result, clamping of the tab part 21 is achieved without causing damage to the tab part 21, which is beneficial for enhancing the working reliability of the clamping mechanism 100.

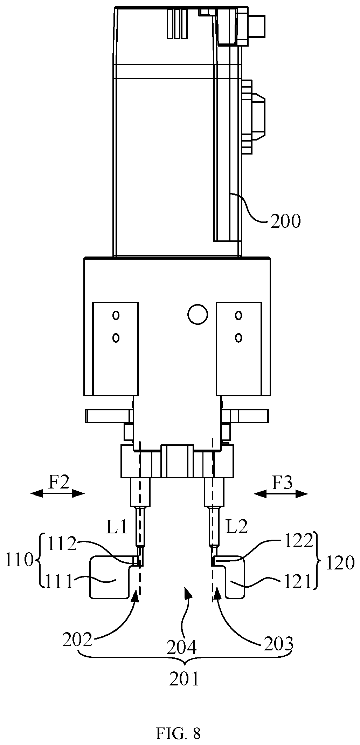

According to some embodiments of the present application, optionally, as shown in FIGs. 7 and 8, the driving mechanism 200 is configured to drive at least one clamping plate 130 to rotate to enable the plurality of clamping plates 130 to jointly clamp or release the tab part 21.

According to the above method, by arranging the driving mechanism 200 to drive at least one of the clamping plates 130 to rotate so as to enable the plurality of clamping plates 130 to jointly clamp or release the tab part 21, the difficulty of switching the clamping mechanism 100 between clamping and releasing the tab part 21 is effectively reduced, which is beneficial for improving the working efficiency of the tab-through device 2.

According to some embodiments of the present application, optionally, as shown in FIGs. 7 and 8, the driving mechanism 200 is in transmission connection with the first clamping plate 110 and the second clamping plate 120, or the driving mechanism 200 is in transmission connection with either the first clamping plate 110 or the second clamping plate 120, and is configured to drive the first clamping plate 110 and/or the second clamping plate 120 to move, so as to achieve relative movement between the first clamping plate 110 and the second clamping plate 120. This allows the first clamping plate 110 and the second clamping plate 120 to abut against both sides of the tab part 21 to clamp the tab part 21, and allows the first clamping plate 110 and the second clamping plate 120 to disengage from both sides of the tab part 21 to release the tab part 21.

According to the above method, by arranging a clamping mechanism 100 that includes the first clamping plate 110 and the second clamping plate 120, and arranging a driving mechanism 200 that is in transmission connection with the first clamping plate 110 and/or the second clamping plate 120 for driving the first clamping plate 110 and/or the second clamping plate 120 to move, the clamping mechanism 100 is kept from contacting the tab part 21 before clamping the tab part 21, such that the tab part 21 can enter the clamping range of the clamping mechanism 100. Subsequently, the first clamping plate 110 and the second clamping plate 120 abut against both sides of the tab part 21 to clamp the tab part 21. After the tab part 21 passes through the through hole 14, the first clamping plate 110 and the second clamping plate 120 disengage from both sides of the tab part 21 to release the tab part 21. The assembly process is simple and smooth. Clamping by abutting against both sides of the tab part 21 enables the tab part 21 to be guided to pass through the through hole 14 smoothly without causing damage to the tab part 21, which is beneficial for improving the efficiency of the tab part 21 passing through the through hole 14, and effectively enhances the working stability and reliability of the tab-through device 2.

According to some embodiments of the present application, optionally, as shown in FIGs. 7 to 9, the driving mechanism 200 is configured to drive the first clamping plate 110 and the second clamping plate 120 to rotate, or the driving mechanism 200 is configured to drive either the first clamping plate 110 or the second clamping plate 120 to rotate, such that the first clamping plate 110 and the second clamping plate 120 can clamp or release the tab part 21.

According to the above method, by rotating the first clamping plate 110 and/or the second clamping plate 120 to achieve relative movement between the two, the first clamping plate 110 and the second clamping plate 120 can be switched between abutting against the tab part 21 and disengaging from the tab part 21. This effectively reduces the difficulty for the clamping mechanism 100 to switch between clamping and releasing the tab part 21, which is beneficial for improving the working efficiency of the tab-through device 2.

According to some embodiments of the present application, optionally, as shown in FIGs. 7 and 8, the driving mechanism 200 is configured to drive the first clamping plate 110 and the second clamping plate 120 to rotate. The first clamping plate 110 is configured to be capable of rotating about a first rotation axis L1, and the second clamping plate 120 is configured to be capable of rotating about a second rotation axis L2, with the first rotation axis L1 and the second rotation axis L2 arranged side by side.

Optionally, the first clamping plate 110 switches between a first clamping position and a first releasing position by rotating about the first rotation axis L1, and the second clamping plate 120 switches between a second clamping position and a second releasing position by rotating about the second rotation axis L2. When the first clamping plate 110 is in the first releasing position and the second clamping plate 120 is in the second releasing position, the relative position between the two is in the releasing position, and the first clamping plate 110 and the second clamping plate 120 are staggered apart from each other. When the first clamping plate 110 is in the first clamping position and the second clamping plate 120 is in the second clamping position, the relative position between the two is in the clamping position, with the first clamping plate 110 and the second clamping plate 120 rotated to at least partially overlap with each other.

Optionally, the first rotation axis L1 and the second rotation axis L2 are arranged in parallel. When the clamping mechanism 100 switches from the releasing position to the clamping position, the first clamping plate 110 and the second clamping plate 120 respectively rotate about the first rotation axis L1 and the second rotation axis L2 in the same direction, which can be in a clockwise direction or in a counterclockwise direction, until the first clamping plate 110 and the second clamping plate 120 rotate to at least partially overlap with each other. When in the clamping position to clamp the tab part 21, the first clamping plate 110 and the second clamping plate 120 respectively abut against both sides of the tab part 21, so as to clamp the tab part 21 with the overlapping portions of the first clamping plate 110 and the second clamping plate 120.

According to the above method, by arranging the first clamping plate 110 and the second clamping plate 120 that can rotate about the first rotation axis L1 and the second rotation axis L2, respectively, with the first rotation axis L1 and the second rotation axis L2 arranged side by side, it is achieved that in the releasing position, the first clamping plate 110 and the second clamping plate 120 are staggered apart from each other, allowing the tab part 21 to enter therebetween. When switched to the clamping position, the first clamping plate 110 and the second clamping plate 120 simultaneously rotate to at least partially overlap with each other to clamp the tab part 21 with the overlapping portions of the two. This makes the structure simple and the operation convenient, which is beneficial for improving the clamping efficiency of the clamping mechanism 100 and effectively enhances the working reliability of the clamping assembly.

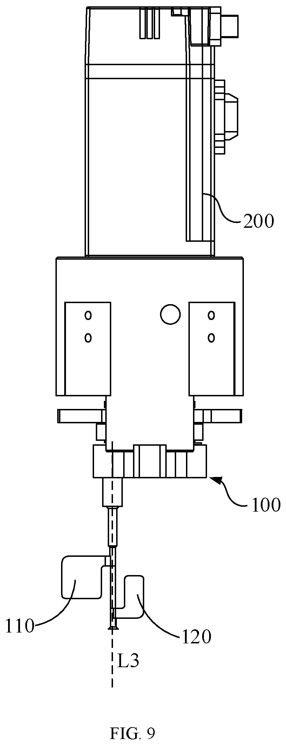

According to some embodiments of the present application, optionally, as shown in FIG. 9, the driving mechanism 200 is in transmission connection with the first clamping plate 110 for driving the first clamping plate 110 to rotate about a preset rotation axis L3; the second clamping plate 120 is spaced apart from the preset rotation axis L3 and is relatively fixed.

Optionally, the first clamping plate 110 switches between the first clamping position and the first releasing position by rotating about the preset rotation axis L3, and the second clamping plate 120 is fixedly arranged in the second clamping position. When the first clamping plate 110 is rotated to the first releasing position, the second clamping plate 120 is in the second clamping position, and the relative position between the first clamping plate 110 and the second clamping plate 120 is the releasing position; in this case, the second clamping plate 120 and the first clamping plate 110 are staggered apart from each other. When the first clamping plate 110 is rotated to the first clamping position, the second clamping plate 120 is in the second clamping position, and the relative position between the first clamping plate 110 and the second clamping plate 120 is the clamping position; in this case, the first clamping plate 110 is rotated to at least partially overlap with the second clamping plate 120.

Optionally, by rotating the first clamping plate 110 about the preset rotation axis L3 to switch between the releasing position and the clamping position between the first clamping plate 110 and the second clamping plate 120, the first clamping plate 110 may be rotated in a clockwise direction or in a counterclockwise direction. When in the clamping position, the first clamping plate 110 and the second clamping plate 120 are respectively located on both sides of the tab part 21, so as to clamp the tab part 21 with the overlapping portions of the first clamping plate 110 and the second clamping plate 120.

According to the above method, the driving mechanism 200 drives the first clamping plate 110 to rotate to switch between the releasing position and the clamping position between the first clamping plate 110 and the second clamping plate 120. This facilitates appropriate positioning of the tab part 21 by using the second clamping plate 120 when in the releasing position, and, when switched to the clamping position, the first clamping plate 110 rotates to at least partially overlap with the second clamping plate 120, so as to clamp the tab part 21 with the overlapping portions. This is beneficial for improving the clamping precision and effectively enhances the working reliability of the clamping assembly.

According to some embodiments of the present application, optionally, as shown in FIG. 9, the first clamping plate 110 and the second clamping plate 120 are rotatably connected, and the first clamping plate 110 and the second clamping plate 120 can rotate relative to each other about the same preset rotation axis L3. The driving mechanism 200 is in transmission connection with the first clamping plate 110 and/or the second clamping plate 120, so as to drive the first clamping plate 110 and/or the second clamping plate 120 to rotate about the preset rotation axis L3.

According to the above method, through the arrangement of the first clamping plate 110 and the second clamping plate 120 that rotate about the same preset rotation axis L3, it is possible to smoothly switch between the releasing position and the clamping position between the first clamping plate 110 and the second clamping plate 120, which is beneficial for smoothly clamping and guiding the tab part 21 to pass through the through hole 14, effectively improving the clamping efficiency of the clamping mechanism 100, and effectively enhancing the working reliability of the tab-through device 2. In addition, by arranging the first clamping plate 110 and the second clamping plate 120 to rotate about the same preset rotation axis L3, the mounting and positioning of the first clamping plate 110 and the second clamping plate 120 are facilitated, which is beneficial for reducing the difficulty of assembly and disassembly of the tab-through device 2.

According to some embodiments of the present application, optionally, as shown in FIGs. 7 and 8, the driving mechanism 200 is configured to drive the first clamping plate 110 and/or the second clamping plate 120 to rotate to allow the relative position between the first clamping plate 110 and the second clamping plate 120 to switch between the clamping position and the releasing position. When in the clamping position, the first clamping plate 110 and the second clamping plate 120 at least partially overlap and abut each other in the thickness direction F4 of the tab part 21, so as to clamp both sides of the tab part 21 in the thickness direction F4; when in the releasing position, the abutment between the first clamping plate 110 and the second clamping plate 120 is released, so as to release the tab part 21. In some embodiments, when in the releasing position, the first clamping plate 110 and the second clamping plate 120 are spaced apart from each other and arranged in a flat manner.

According to the above method, by arranging the first clamping plate 110 and the second clamping plate 120 spaced apart from each other and in a flat manner when in the releasing position, the space occupied by the clamping mechanism 100 can be reduced, and the mounting and positioning of the first clamping plate 110 and the second clamping plate 120 are facilitated. When in the clamping position, the first clamping plate 110 and the second clamping plate 120 at least partially overlap to abut against both sides of the tab part 21, thereby improving the stability of clamping while avoiding damage to the tab part 21, and effectively enhancing the working reliability of the clamping assembly.

According to some embodiments of the present application, optionally, as shown in FIG. 8, when the relative position between the first clamping plate 110 and the second clamping plate 120 is in the releasing position, an avoidance space 201 for accommodating the tab part 21 is formed between the first clamping plate 110 and the second clamping plate 120. When the relative position between the first clamping plate 110 and the second clamping plate 120 is in the clamping position, the overlapping portions of the first clamping plate 110 and the second clamping plate 120 are respectively located on the two oppositely arranged side surfaces of the tab part 21, so as to clamp the tab part 21.

According to the above method, when in the releasing position, the tab part 21 can enter the avoidance space 201 formed between the first clamping plate 110 and the second clamping plate 120. Thus, when switched to the clamping position, the first clamping plate 110 and the second clamping plate 120 only need to be rotated to achieve the clamping of the tab part 21 by abutting against both sides of the tab part 21, without the need for additional positional adjustment. This effectively improves the clamping efficiency of the clamping mechanism 100. Moreover, the overlapping portions of the two clamping plates are respectively located on the two oppositely arranged side surfaces of the tab part 21, which is beneficial for enhancing the stability of clamping, effectively reducing the possibility of damage to the tab part 21, and effectively enhancing the working reliability of the clamping mechanism 100.

According to some embodiments of the present application, optionally, as shown in FIG. 8, a first avoidance notch 202 is formed in the first clamping plate 110, and a second avoidance notch 203 is formed in the second clamping plate 120. When the relative position between the first clamping plate 110 and the second clamping plate 120 is in the releasing position, the first avoidance notch 202 and the second avoidance are arranged opposite to each other, and a spacing space 204 is provided between the first avoidance notch 202 and the second avoidance notch 203. The first avoidance notch 202, the second avoidance notch 203, and the spacing space 204 are in communication with each other to form the avoidance space 201.

According to the above method, by forming the first avoidance notch 202, the second avoidance notch 203, and the spacing space 204 in communication to form the avoidance space 201, it is beneficial for the tab part 21 to smoothly enter the avoidance space 201 when the relative position between the first clamping plate 110 and the second clamping plate 120 is in the releasing position, thus avoiding interference between the first clamping plate 110 and the second clamping plate 120 that could cause damage. Additionally, the formation of the first avoidance notch 202 and the second avoidance notch 203 can reduce the required space occupied by the clamping mechanism 100 while ensuring the size of the avoidance space 201, which is beneficial for improving space utilization and effectively enhances the working reliability of the clamping mechanism 100.

According to some embodiments of the present application, optionally, as shown in FIG. 8, the first clamping plate 110 includes a first plate body 111 and a first rotating part 112. The first rotating part 112 is arranged in a protruding manner on the edge of one side of the first plate body 111, so as to form the first avoidance notch 202 between the first rotating part 112 and the first plate body 111. The driving mechanism 200 is in transmission connection with the first rotating part 112 to drive the first rotating part 112 to rotate about the first rotation axis L1. Optionally, the second clamping plate 120 includes a second plate body 121 and a second rotating part 122. The second rotating part 122 is arranged in a protruding manner on the edge of one side of the second plate body 121, so as to form the second avoidance notch 203 between the second rotating part 122 and the second plate body 121. The driving mechanism 200 is in transmission connection with the second rotating part 122 to drive the second rotating part 122 to rotate about the second rotation axis L2.

According to the above method, by arranging the first plate body 111 and the first rotating part 112 to form the first avoidance notch 202, and arranging the second plate body 121 and the second rotating part 122 to form the second avoidance notch 203, the tab part 21 can be accommodated in the avoidance space 201 when the relative position between the first clamping plate 110 and the second clamping plate 120 is in the releasing position. When switched to the clamping position, the driving mechanism 200 only needs to drive the first rotating part 112 and the second rotating part 122 to rotate so as to drive the first plate body 111 and the second plate body 121 to rotate, thereby achieving the clamping of the tab part 21. This makes the operation convenient and the structure simple, thereby effectively enhancing the clamping efficiency and working reliability of the clamping mechanism 100.

According to some embodiments of the present application, optionally, as shown in FIGs. 7 and 8, the rotational directions of the first clamping plate 110 and the second clamping plate 120 are the same. In some embodiments, the first rotation axis L1 and the second rotation axis L2 are parallel to each other. In some embodiments, the first rotation axis L1 and the second rotation axis L2 are arranged perpendicular to the top part 13, or parallel to the axis of the through hole 14.

According to the above method, the mounting and positioning difficulty of the first clamping plate 110 and the second clamping plate 120 is effectively reduced, and it is beneficial for smoothly clamping and guiding the tab part 21 to pass through the through hole 14, thereby effectively improving the clamping efficiency of the clamping mechanism 100 and effectively enhancing the working reliability of the tab-through device 2.

According to some embodiments of the present application, optionally, as shown in FIG. 8, the ratio of the width of the first clamping plate 110 in the direction F2 perpendicular to the first rotation axis L1 to the width of the second clamping plate 120 in the direction F3 perpendicular to the second rotation axis L2 is 0.5 to 2. In some embodiments, the length of the first clamping plate 110 along the first rotation axis L1 is the same as the length of the second clamping plate 120 along the second rotation axis L2.

In some embodiments, the ratio of the width of the first clamping plate 110 in the direction F2 perpendicular to the first rotation axis L1 to the width of the second clamping plate 120 in the direction F3 perpendicular to the second rotation axis L2 is 0.5. In some embodiments, the ratio of the width of the first clamping plate 110 in the direction F2 perpendicular to the first rotation axis L1 to the width of the second clamping plate 120 in the direction F3 perpendicular to the second rotation axis L2 is 1. In some embodiments, the ratio of the width of the first clamping plate 110 in the direction F2 perpendicular to the first rotation axis L1 to the width of the second clamping plate 120 in the direction F3 perpendicular to the second rotation axis L2 is 1.5. In some embodiments, the ratio of the width of the first clamping plate 110 in the direction F2 perpendicular to the first rotation axis L1 to the width of the second clamping plate 120 in the direction F3 perpendicular to the second rotation axis L2 is 2.

According to the above method, by appropriately setting the ratio of the width of the first clamping plate 110 in the direction F2 perpendicular to the first rotation axis L1 to the width of the second clamping plate 120 in the direction F3 perpendicular to the second rotation axis L2, the clamping stability for the tab part 21 is effectively improved while effectively ensuring the smooth operation of the clamping mechanism 100. This effectively reduces the possibility that the tab part 21 cannot be stably and reliably clamped due to the ratio of the widths of the two clamping plates being too small or too large. Moreover, the appropriate setting of the lengths of the first clamping plate 110 and the second clamping plate 120 can effectively ensure the area of the overlapping portions between the two clamping plates in the clamping position, thereby effectively improving space utilization and providing effective and reliable clamping for the tab part 21.

According to some embodiments of the present application, optionally, as shown in FIG. 6, the tab-through device 2 includes a transmission mechanism 300. The driving mechanism 200 is in transmission connection with the transmission mechanism 300, and the transmission mechanism 300 is in transmission connection with the first clamping plate 110 and the second clamping plate 120.

According to the above method, the arrangement of the transmission mechanism 300 achieves the transmission connection between the driving mechanism 200 and the first clamping plate 110 and the second clamping plate 120, which provides a basis for switching between the releasing position and the clamping position, thereby effectively enhancing the working reliability of the tab-through device 2.

According to some embodiments of the present application, optionally, as shown in FIG. 7, the transmission mechanism 300 includes a first transmission rod 310 that rotates about the first rotation axis L1 and a second transmission rod 320 that rotates about the second rotation axis L2. The first transmission rod 310 is connected to the first clamping plate 110, and the second transmission rod 320 is connected to the second clamping plate 120. The driving mechanism 200 is in transmission connection with the first transmission rod 310 and the second transmission rod 320 for driving the first transmission rod 310 to rotate about the first rotation axis L1 and driving the second transmission rod 320 to rotate about the second rotation axis L2.

According to the above method, through the arrangement of the first transmission rod 310 and the second transmission rod 320, the driving mechanism 200 can drive the first transmission rod 310 and the second transmission rod 320 to rotate, so as to respectively drive the first clamping plate 110 and the second clamping plate 120 to rotate, thereby enabling the first clamping plate 110 and the second clamping plate 120 to rotate about the first rotation axis and second rotation axis, respectively. This enables switching between the releasing position and the clamping position, thereby effectively enhancing the working reliability of the tab-through device 2.

According to some embodiments of the present application, optionally, as shown in FIG. 7, the transmission mechanism 300 includes a linkage mechanism 330. The linkage mechanism 330 is in transmission connection with the first transmission rod 310 and the second transmission rod 320, the driving mechanism 200 is in transmission connection with the linkage mechanism 330, and the driving mechanism 200 is configured to drive, via the linkage mechanism 330, the first transmission rod 310 and the second transmission rod 320 to rotate.

According to the above method, by arranging the linkage mechanism 330 to drive the first transmission rod 310 and the second transmission rod 320 to rotate, a smooth switching between the releasing position and the clamping position can be achieved, thereby facilitating the clamping of the tab part 21, and effectively enhancing the working reliability of the tab-through device 2. Additionally, the linkage mechanism 330 features a stable structure, convenient assembly and disassembly, and ease of mounting and maintenance.

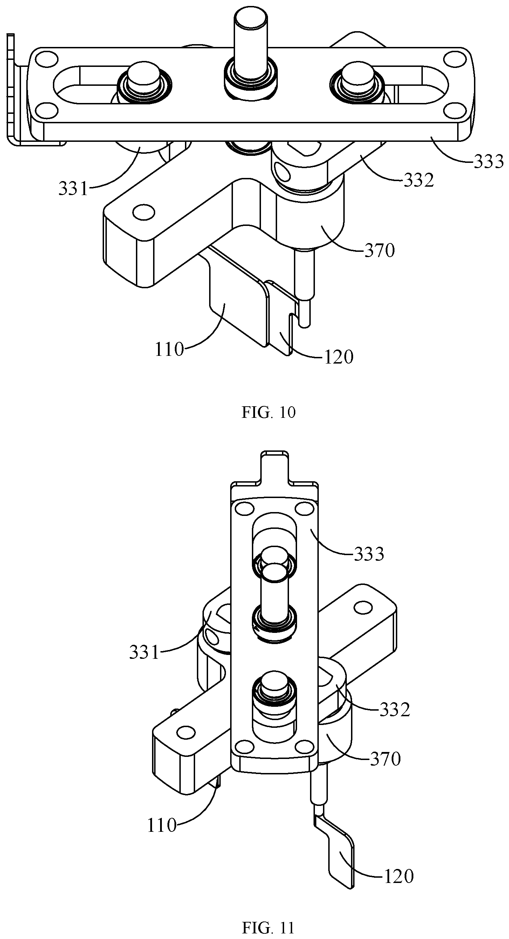

According to some embodiments of the present application, optionally, as shown in FIGs. 10 and 11, the linkage mechanism 330 includes a base 370, a first link 331, a second link 332, and a third link 333. The first link 331, the second link 332, and the third link 333 are arranged on one side of the base 370, and the third link 333 is in transmission connection with the first link 331 and the second link 332. The driving mechanism 200 is configured to drive the third link 333 to rotate. The first transmission rod 310 and the second transmission rod 320 pass through the base 370 from the other side of the base 370 and are in transmission connection with the first link 331 and the second link 332, respectively.

According to the above method, by arranging the linkage mechanism 330 to drive the first transmission rod 310 and the second transmission rod 320 to rotate, a smooth switching between the releasing position and the clamping position of the clamping mechanism 100 can be achieved, thereby facilitating the clamping of the tab part 21, and effectively enhancing the working reliability of the tab-through device 2. Additionally, the linkage mechanism 330 features high carrying capacity and good impact resistance, which is beneficial for improving the service life of the tab-through device 2.

Furthermore, as shown in FIGs. 10 and 11, one end of the first link 331 and one end of the second link 332 are respectively in transmission connection with both ends of the third link 333. The other end of the first link 331 and the other end of the second link 332 are connected to the base 370. The driving mechanism 200 drives the third link 333 to rotate, and the third link 333 drives the first link 331 and the second link 332 to rotate, thereby driving the first transmission rod 310 and the second transmission rod 320 to rotate, so as to switch between the releasing position and the clamping position. As shown in FIG. 11, the clamping mechanism 100 is in the releasing position, and as shown in FIG. 10, the clamping mechanism 100 is in the clamping position.

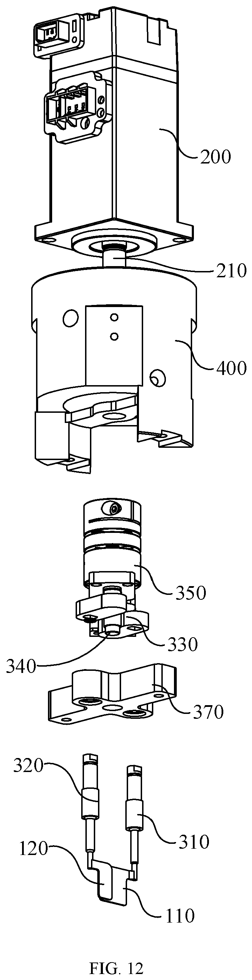

According to some embodiments of the present application, optionally, as shown in FIG. 12, the transmission mechanism 300 includes an input shaft 340 and a coupling 350, and the driving mechanism 200 is provided with an output shaft 210; the input shaft 340 and the output shaft 210 are connected via the coupling 350, and the input shaft 340 is in transmission connection with the linkage mechanism 330.

According to the above method, through the arrangement of the input shaft 340 and the coupling 350, the power output by the output shaft 210 of the driving mechanism 200 is transmitted to the linkage mechanism 330 via the coupling 350 and the input shaft 340, which makes the operation convenient and the structure simple, and effectively enhances the working stability and reliability of the transmission mechanism 300.

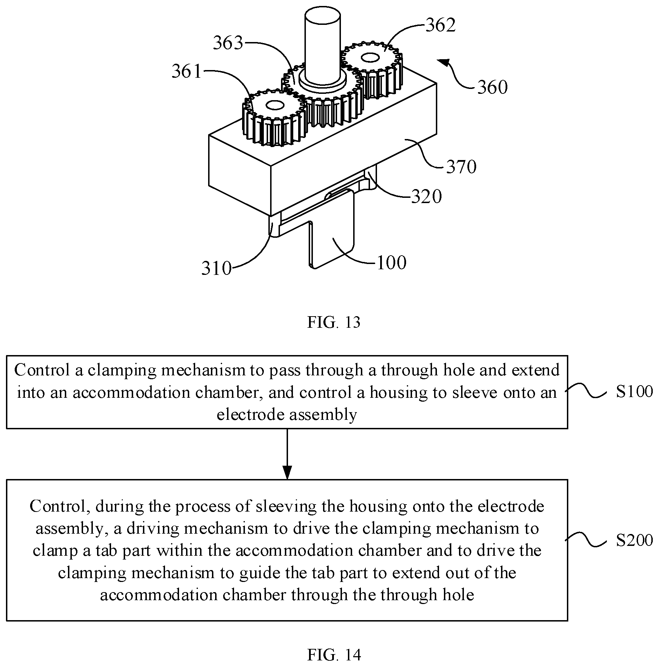

According to some embodiments of the present application, optionally, as shown in FIG. 13, the transmission mechanism 300 includes a gear mechanism 360. The gear mechanism 360 is in transmission connection with the first transmission rod 310 and the second transmission rod 320, the driving mechanism 200 is in transmission connection with the gear mechanism 360, and the driving mechanism 200 is configured to drive, via the gear mechanism 360, the first transmission rod 310 and the second transmission rod 320 to rotate.

According to the above method, by arranging the gear mechanism 360 to drive the first transmission rod 310 and the second transmission rod 320 to rotate, a smooth switching between the releasing position and the clamping position of the clamping mechanism 100 can be achieved, thereby facilitating the clamping of the tab part 21, and effectively enhancing the working reliability of the tab-through device 2. Additionally, the gear mechanism 360 features a stable structure, lower manufacturing cost, and convenient positioning, mounting, and disassembly, thereby effectively reducing the difficulty of mounting and maintenance.

According to some embodiments of the present application, optionally, as shown in FIG. 13, the gear mechanism 360 includes a base 370, a main gear 363, a first driven gear 361, and a second driven gear 362. The main gear 363, the first driven gear 361, and the second driven gear 362 are arranged on one side of the base 370, and the first driven gear 361 and the second driven gear 362 mesh with each other. The driving mechanism 200 is configured to drive a first driving gear to rotate. The first transmission rod 310 and the second transmission rod 320 pass through the base 370 from the other side of the base 370 and are in transmission connection with the first driven gear 361 and the second driven gear 362, respectively.

According to the above method, the driving mechanism 200 drives the first main gear 363 to rotate, such that the rotation of the first driven gear 361 and the second driven gear 362 can be achieved, thereby achieving the switching between the releasing position and the clamping position of the clamping mechanism 100. This makes the operation convenient, the structure simple, and the assembly and disassembly easy, and achieves high structural stability, which is beneficial for improving the service life of the gear mechanism 360 and enhancing the working reliability of the tab-through device 2.

According to some embodiments of the present application, optionally, as shown in FIG. 12, the transmission mechanism 300 includes an input shaft 340 and a coupling 350, and the driving mechanism 200 is provided with an output shaft 210; the input shaft 340 and the output shaft 210 are connected via the coupling 350, and the input shaft 340 is in transmission connection with the gear mechanism 360.

According to the above method, through the arrangement of the input shaft 340 and the coupling 350, the power output by the output shaft 210 of the driving mechanism 200 is transmitted to the gear mechanism 360 via the coupling 350 and the input shaft 340, which makes the operation convenient and the structure simple, and effectively enhances the working stability and reliability of the transmission mechanism 300.

According to some embodiments of the present application, optionally, as shown in FIG. 12, the tab-through device 2 includes a flange seat 400, and the driving mechanism 200 and the transmission mechanism 300 are connected via the flange seat 400.

According to the above method, by arranging the flange seat 400 to achieve the connection between the driving mechanism 200 and the transmission mechanism 300, the connection stability between the driving mechanism 200 and the transmission mechanism 300 is effectively improved, which is beneficial for enhancing the working stability and reliability of the transmission mechanism 300.

Furthermore, the process of sleeving the housing 10 onto the electrode assembly 20 includes a first stage. In the first stage, the clamping mechanism 100 is configured to be capable of moving together with the housing 10 relative to the electrode assembly 20, so as to clamp the tab part 21 in the first stage. The process of sleeving the housing 10 onto the electrode assembly 20 includes a second stage following the first stage. In the second stage, the clamping mechanism 100 is configured to be capable of moving relative to the housing 10 in directions away from each other while maintaining the clamping on the tab part 21, thereby clamping the tab part 21 to extend out of the accommodation chamber 11 through the through hole 14.

According to the above method, the clamping mechanism 100 moves together with the housing 10 relative to the electrode assembly 20 in the first stage, such that the clamping mechanism 100 can approach the tab part 21 as the electrode assembly 20 is gradually inserted into the housing, thereby facilitating the clamping of the tab part 21 in the first stage. This enables smooth and efficient clamping of the tab part 21, effectively improving the clamping efficiency of the clamping mechanism 100 and the assembly efficiency of the battery 1. In the second stage, the clamping mechanism 100 moves relative to the housing 10 in directions away from each other and maintains the clamping on the tab part 21, such that the tab part 21 can be guided to extend out of the accommodation chamber 11 through the through hole 14 as the electrode assembly 20 is further inserted into the housing. This makes the assembly process smooth and clear, effectively improving the efficiency of the tab part 21 passing through the through hole 14 and the assembly efficiency of the battery 1.

According to some embodiments of the present application, optionally, as shown in FIGs. 7 and 8, the driving mechanism 200 is configured to drive the clamping mechanism 100 to switch between the clamping position and the releasing position, and the clamping mechanism 100 is configured to clamp the tab part 21 by switching from the releasing position to the clamping position. Prior to the first stage, the driving mechanism 200 is configured to drive the clamping mechanism 100 to be in the clamping position, and the clamping mechanism 100 is configured to be capable of moving relative to the housing 10, so as to pass through the through hole 14 and extend into the accommodation chamber 11 in the clamping position. The driving mechanism 200 is configured to drive the clamping mechanism 100 to switch from the clamping position to the releasing position after the clamping mechanism 100 extends into the accommodation chamber 11.

According to the above method, the clamping mechanism 100, which is in the clamping position during the first stage, can smoothly pass through the through hole 14 and extend into the accommodation chamber 11. Compared with the situation where the clamping mechanism 100 passes through the through hole 14 in the releasing position, the space occupied by the clamping mechanism 100 can be effectively reduced, and the area of the through hole 14 needed for the clamping structure to pass through the through hole 14 is decreased, thereby effectively improving space utilization. Moreover, after the clamping mechanism 100 extends into the accommodation chamber 11 and switches from the clamping position to the releasing position, the tab part 21 can easily enter the clamping range of the clamping mechanism 100, thereby facilitating the clamping of the tab part 21 and effectively enhancing the working reliability of the tab-through device 2.

According to some embodiments of the present application, as shown in FIG. 14, the assembly method for the battery 1 according to the present application may include the following steps.

In S100, a clamping mechanism is controlled to pass through a through hole and extend into an accommodation chamber, and a housing is controlled to sleeve onto an electrode assembly.

First, the clamping mechanism 100, with the relative position between the first clamping plate 110 and the second clamping plate 120 in a clamping position, is controlled to pass through the through hole 14 and extend into the accommodation chamber 11, so as to reduce the required area of the through hole 14 and lower the possibility of damaging the housing 10. Afterward, the clamping mechanism 100 and the housing 10 are controlled to move down along a preset assembly direction F1 to approach the electrode assembly 20, and the housing 10 is sleeved onto the electrode assembly 20.

In S200, during the process of sleeving the housing onto the electrode assembly, a driving mechanism is controlled to drive the clamping mechanism to clamp a tab part within the accommodation chamber and to drive the clamping mechanism to guide the tab part to extend out of the accommodation chamber through the through hole.

The process of sleeving the housing 10 onto the electrode assembly 20 includes a first stage and a second stage arranged in sequential order. In the first stage, the clamping mechanism 100 and the housing 10 are controlled to move together relative to the electrode assembly 20, and the clamping mechanism 100 is controlled to switch the relative position between the first clamping plate 110 and the second clamping plate 120 to the releasing position within the accommodation chamber 11, so as to facilitate the tab part 21 in entering the clamping range of the clamping mechanism 100. After the tab part 21 enters the clamping range of the clamping mechanism 100, the relative position between the first clamping plate 110 and the second clamping plate 120 is switched to the clamping position to clamp the tab part 21 in the first stage. In the second stage, the clamping mechanism 100 and the housing 10 are controlled to move relative to each other in directions away from each other, while the clamping mechanism 100 keeps clamping the tab part 21, such that the tab part 21 is clamped to extend out of the accommodation chamber 11 through the through hole 14, and the housing 10 is further sleeved onto the electrode assembly 20.

According to the above method, during the gradual insertion of the electrode assembly 20 into the housing, the clamping mechanism 100 can clamp the tab part 21, and the tab part 21 of the battery 1 can be smoothly guided to extend out of the accommodation chamber 11 through the through hole 14. As a result, the tab part 21 is less likely to obstruct the housing 10 from being sleeved onto the electrode assembly 20, and the tab part 21 is also less likely to be damaged by collision with the housing 10 or to fail to smoothly pass through the through hole 14. Thus, precise insertion of the electrode assembly 20 into the housing is achieved, and the tab part 21 is guided to extend out of the accommodation chamber 11 through the through hole 14 while the housing 10 is being sleeved onto the electrode assembly 20, thereby effectively improving the working stability and reliability of the tab-through device 2, effectively reducing the assembly difficulty of the battery 1, and effectively improving the assembly efficiency and the yield rate of the battery 1.

According to some embodiments of the present application, optionally, as shown in FIGs. 3 to 12, the battery 1 includes a housing 10 and an electrode assembly 20. The housing 10 is provided with an accommodation chamber 11, and a through hole 14 that communicates the accommodation chamber 11 with the outside is formed in the housing 10. The electrode assembly 20 is arranged in the accommodation chamber 11. The tab-through device 2 is configured to guide the tab part 21 of the electrode assembly 20 to extend out of the through hole 14. The tab-through device 2 includes a clamping mechanism 100 and a driving mechanism 200. The clamping mechanism 100 is configured to clamp the tab part 21, and the driving mechanism 200 is in transmission connection with the clamping mechanism 100 for driving the clamping mechanism 100 to move. The driving mechanism 200 is configured to drive the clamping mechanism 100 to clamp the tab part 21 within the accommodation chamber 11 to extend out of the accommodation chamber 11 through the through hole 14. The clamping mechanism 100 includes a plurality of clamping plates 130, and the driving mechanism 200 is in transmission connection with at least one clamping plate among the plurality of clamping plates 130 for driving the at least one clamping plate 130 to move. Additionally, the driving mechanism 200 is configured to be capable of driving the plurality of clamping plates 130 to clamp the circumference of the tab part 21 to enable the tab part 21 to extend out of the accommodation chamber 11, and configured to enable the plurality of clamping plates 130 to release the circumference of the tab part 21 to release the tab part 21. The plurality of clamping plates 130 include a first clamping plate 110 and a second clamping plate 120. The driving mechanism 200 is configured to be capable of driving the first clamping plate 110 and the second clamping plate 120 to abut against and clamp both sides of the tab part 21 in the thickness direction F4. The driving mechanism 200 is configured to drive at least one clamping plate 130 to rotate to enable the plurality of clamping plates 130 to jointly clamp or release the tab part 21. The driving mechanism 200 is configured to drive the first clamping plate 110 and the second clamping plate 120 to rotate. The first clamping plate 110 is capable of rotating about a first rotation axis L1, and the second clamping plate 120 is capable of rotating about a second rotation axis L2, with the first rotation axis L1 and the second rotation axis L2 arranged side by side. Alternatively, the driving mechanism 200 is in transmission connection with the first clamping plate 110 for driving the first clamping plate 110 to rotate about a preset rotation axis L3; the second clamping plate 120 is spaced apart from the preset rotation axis L3 and is relatively fixed. The driving mechanism 200 is configured to drive the first clamping plate 110 and/or the second clamping plate 120 to rotate to allow the relative position between a first clamping plate 110 and a second clamping plate 120 to switch between the clamping position and the releasing position. When in the clamping position, the first clamping plate 110 and the second clamping plate 120 at least partially overlap and abut each other in the thickness direction F4 of the tab part 21, so as to clamp both sides of the tab part 21 in the thickness direction F4; when in the releasing position, the abutment between the first clamping plate 110 and the second clamping plate 120 is released, so as to release the tab part 21. A first avoidance notch 202 is formed in the first clamping plate 110, and a second avoidance notch 203 is formed in the second clamping plate 120. When in the releasing position, the first avoidance notch 202 and the second avoidance notch 203 are arranged opposite to each other, and a spacing space 204 is provided between the first avoidance notch 202 and the second avoidance notch 203. The first avoidance notch 202, the second avoidance notch 203, and the spacing space 204 are in communication with each other to form an avoidance space 201. The first clamping plate 110 includes a first plate body 111 and a first rotating part 112. The first rotating part 112 is arranged in a protruding manner on the edge of one side of the first plate body 111, so as to form the first avoidance notch 202 between the first rotating part 112 and the first plate body 111. The driving mechanism 200 is in transmission connection with the first rotating part 112 to drive the first rotating part 112 to rotate about the first rotation axis L1. Additionally/alternatively, the second clamping plate 120 includes a second plate body 121 and a second rotating part 122. The second rotating part 122 is arranged in a protruding manner on the edge of one side of the second plate body 121, so as to form the second avoidance notch 203 between the second rotating part 122 and the second plate body 121. The driving mechanism 200 is in transmission connection with the second rotating part 122 to drive the second rotating part 122 to rotate about the second rotation axis L2. The rotational directions of the first clamping plate 110 and the second clamping plate 120 are the same. Additionally/alternatively, the first rotation axis L1 and the second rotation axis L2 are parallel to each other. Additionally/alternatively, the first rotation axis L1 and the second rotation axis L2 are arranged parallel to the axis of the through hole 14. The ratio of the width of the first clamping plate 110 in the direction F2 perpendicular to the first rotation axis L1 to the width of the second clamping plate 120 in the direction F3 perpendicular to the second rotation axis L2 is 0.5 to 2. Additionally/alternatively, the length of the first clamping plate 110 along the first rotation axis L1 is the same as the length of the second clamping plate 120 along the second rotation axis L2. The first clamping plate 110 and the second clamping plate 120 are rotatably connected, and the first clamping plate 110 and the second clamping plate 120 can rotate relative to each other about the same preset rotation axis L3. The driving mechanism 200 is in transmission connection with the first clamping plate 110 and/or the second clamping plate 120, so as to drive the first clamping plate 110 and/or the second clamping plate 120 to rotate about the preset rotation axis L3. The tab-through device 2 includes a transmission mechanism 300. The driving mechanism 200 is in transmission connection with the transmission mechanism 300, and the transmission mechanism 300 is in transmission connection with the first clamping plate 110 and the second clamping plate 120. The transmission mechanism 300 includes a first transmission rod 310 that rotates about the first rotation axis L1 and a second transmission rod 320 that rotates about the second rotation axis L2. The first transmission rod 310 is connected to the first clamping plate 110, and the second transmission rod 320 is connected to the second clamping plate 120. The driving mechanism 200 is in transmission connection with the first transmission rod 310 and the second transmission rod 320 for driving the first transmission rod 310 to rotate about the first rotation axis L1 and driving the second transmission rod 320 to rotate about the second rotation axis L2. The transmission mechanism 300 includes a linkage mechanism 330. The linkage mechanism 330 is in transmission connection with the first transmission rod 310 and the second transmission rod 320, the driving mechanism 200 is in transmission connection with the linkage mechanism 330, and the driving mechanism 200 is configured to drive, via the linkage mechanism 330, the first transmission rod 310 and the second transmission rod 320 to rotate. The linkage mechanism 330 includes a base 370, a first link 331, a second link 332, and a third link 333. The first link 331, the second link 332, and the third link 333 are arranged on one side of the base 370, and the third link 333 is in transmission connection with the first link 331 and the second link 332. The driving mechanism 200 is configured to drive the third link 333 to rotate. The first transmission rod 310 and the second transmission rod 320 pass through the base 370 from the other side of the base 370 and are in transmission connection with the first link 331 and the second link 332, respectively. The transmission mechanism 300 includes an input shaft 340 and a coupling 350, and the driving mechanism 200 is provided with an output shaft 210; the input shaft 340 and the output shaft 210 are connected via the coupling 350, and the input shaft 340 is in transmission connection with the linkage mechanism 330. The transmission mechanism 300 includes a gear mechanism 360. The gear mechanism 360 is in transmission connection with the first transmission rod 310 and the second transmission rod 320, the driving mechanism 200 is in transmission connection with the gear mechanism 360, and the driving mechanism 200 is configured to drive, via the gear mechanism 360, the first transmission rod 310 and the second transmission rod 320 to rotate. The gear mechanism 360 includes a base 370, a main gear 363, a first driven gear 361, and a second driven gear 362. The main gear 363, the first driven gear 361, and the second driven gear 362 are arranged on one side of the base 370, and the first driven gear 361 and the second driven gear 362 mesh with each other. The driving mechanism 200 is configured to drive a first driving gear to rotate. The first transmission rod 310 and the second transmission rod 320 pass through the base 370 from the other side of the base 370 and are in transmission connection with the first driven gear 361 and the second driven gear 362, respectively. The transmission mechanism 300 includes an input shaft 340 and a coupling 350, and the driving mechanism 200 is provided with an output shaft 210; the input shaft 340 and the output shaft 210 are connected via the coupling 350, and the input shaft 340 is in transmission connection with the gear mechanism 360. The tab-through device 2 includes a flange seat 400, and the driving mechanism 200 and the transmission mechanism 300 are connected via the flange seat 400. The process of sleeving the housing 10 onto the electrode assembly 20 includes a first stage. In the first stage, the clamping mechanism 100 is configured to be capable of moving together with the housing 10 relative to the electrode assembly 20, so as to clamp the tab part 21 in the first stage. The process of sleeving the housing 10 onto the electrode assembly 20 includes a second stage following the first stage. In the second stage, the clamping mechanism 100 is configured to be capable of moving relative to the housing 10 in directions away from each other while maintaining the clamping on the tab part 21, thereby clamping the tab part 21 to extend out of the accommodation chamber 11 through the through hole 14.

According to some embodiments of the present application, as shown in FIG. 4, the assembly apparatus 3 includes the tab-through device 2 described above. Such an arrangement allows the tab part 21 to smoothly extend out of the housing 10, thereby effectively reducing the assembly difficulty of the battery 1 and effectively improving the assembly efficiency of the battery 1.

In summary, the embodiments of the present application can enable the tab part 21 to smoothly extend out of the housing 10, thereby effectively reducing the assembly difficulty of the battery 1 and effectively improving the assembly efficiency of the battery 1.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A tab-through device for a battery, wherein the battery comprises a housing and an electrode assembly, wherein the housing is provided with an accommodation chamber, a through hole that communicates the accommodation chamber with the outside is formed in the housing, the electrode assembly is arranged in the accommodation chamber, and the tab-through device is configured to guide a tab part of the electrode assembly to extend out of the through hole; and the tab-through device comprises:
a clamping mechanism, configured to clamp the tab part; and
a driving mechanism, in transmission connection with the clamping mechanism and configured to drive the clamping mechanism to move;
wherein the driving mechanism is configured to drive the clamping mechanism to clamp the tab part within the accommodation chamber to extend out of the accommodation chamber through the through hole.

2. The tab-through device according to claim 1, wherein
the clamping mechanism comprises a plurality of clamping plates, and the driving mechanism is in transmission connection with at least one clamping plate among the plurality of clamping plates for driving the at least one clamping plate to move;
additionally, the driving mechanism is configured to be capable of driving the plurality of clamping plates to clamp a circumference of the tab part to enable the tab part to extend out of the accommodation chamber, and configured to enable the plurality of clamping plates to release the circumference of the tab part to release the tab part.

3. The tab-through device according to claim 2, wherein
the plurality of clamping plates comprise a first clamping plate and a second clamping plate; the driving mechanism is configured to be capable of driving the first clamping plate and the second clamping plate to abut against and clamp both sides of the tab part in a thickness direction.

4. The tab-through device according to claim 3, wherein
the driving mechanism is configured to drive at least one of the clamping plates to rotate to enable the plurality of clamping plates to jointly clamp or release the tab part.

5. The tab-through device according to claim 4, wherein
the driving mechanism is configured to drive the first clamping plate and the second clamping plate to rotate; the first clamping plate is capable of rotating about a first rotation axis, and the second clamping plate is capable of rotating about a second rotation axis, with the first rotation axis and the second rotation axis arranged side by side; or
the driving mechanism is in transmission connection with the first clamping plate for driving the first clamping plate to rotate about a preset rotation axis; the second clamping plate is spaced apart from the preset rotation axis and is relatively fixed.

6. The tab-through device according to claim 5, wherein
the driving mechanism is configured to drive the first clamping plate and/or the second clamping plate to rotate to allow a relative position between the first clamping plate and the second clamping plate to switch between a clamping position and a releasing position; when in the clamping position, the first clamping plate and the second clamping plate at least partially overlap and abut each other in the thickness direction of the tab part, so as to clamp both sides of the tab part in the thickness direction; when in the releasing position, the abutment between the first clamping plate and the second clamping plate is released, so as to release the tab part.

7. The tab-through device according to claim 6, wherein
a first avoidance notch is formed in the first clamping plate, and a second avoidance notch is formed in the second clamping plate; when in the releasing position, the first avoidance notch and the second avoidance notch are arranged opposite to each other, and a spacing space is provided between the first avoidance notch and the second avoidance notch, with the first avoidance notch, the second avoidance notch, and the spacing space in communication with each other to form an avoidance space.

8. The tab-through device according to claim 7, wherein
the first clamping plate comprises a first plate body and a first rotating part, wherein the first rotating part is arranged in a protruding manner on an edge of one side of the first plate body, so as to form the first avoidance notch between the first rotating part and the first plate body, and the driving mechanism is in transmission connection with the first rotating part to drive the first rotating part to rotate about the first rotation axis; and/or,
the second clamping plate comprises a second plate body and a second rotating part, wherein the second rotating part is arranged in a protruding manner on an edge of one side of the second plate body, so as to form the second avoidance notch between the second rotating part and the second plate body, and the driving mechanism is in transmission connection with the second rotating part to drive the second rotating part to rotate about the second rotation axis.

9. The tab-through device according to claim 5, wherein
rotational directions of the first clamping plate and the second clamping plate are the same; and/or,
the first rotation axis and the second rotation axis are parallel to each other; and/or,
the first rotation axis and the second rotation axis are arranged parallel to an axis of the through hole.

10. The tab-through device according to claim 5, wherein
a ratio of a width of the first clamping plate in a direction perpendicular to the first rotation axis to a width of the second clamping plate in a direction perpendicular to the second rotation axis is 0.5 to 2; and/or,
a length of the first clamping plate along the first rotation axis is the same as a length of the second clamping plate along the second rotation axis.

11. The tab-through device according to claim 4, wherein
the first clamping plate and the second clamping plate are rotatably connected, and the first clamping plate and the second clamping plate are capable of rotating relative to each other about a same preset rotation axis; the driving mechanism is in transmission connection with the first clamping plate and/or the second clamping plate, so as to drive the first clamping plate and/or the second clamping plate to rotate about the preset rotation axis.

12. The tab-through device according to claim 3, wherein
the tab-through device comprises a transmission mechanism, wherein the driving mechanism is in transmission connection with the transmission mechanism, and the transmission mechanism is in transmission connection with the first clamping plate and the second clamping plate.

13. The tab-through device according to claim 12, wherein
the transmission mechanism comprises a first transmission rod that rotates about a first rotation axis and a second transmission rod that rotates about a second rotation axis, wherein the first transmission rod is connected to the first clamping plate, and the second transmission rod is connected to the second clamping plate; the driving mechanism is in transmission connection with the first transmission rod and the second transmission rod for driving the first transmission rod to rotate about the first rotation axis and driving the second transmission rod to rotate about the second rotation axis.

14. The tab-through device according to claim 13, wherein
the transmission mechanism comprises a linkage mechanism, wherein the linkage mechanism is in transmission connection with the first transmission rod and the second transmission rod, the driving mechanism is in transmission connection with the linkage mechanism, and the driving mechanism is configured to drive, via the linkage mechanism, the first transmission rod and the second transmission rod to rotate.

15. The tab-through device according to claim 14, wherein
the linkage mechanism comprises a base, a first link, a second link, and a third link, wherein the first link, the second link, and the third link are arranged on one side of the base, and the third link is in transmission connection with the first link and the second link, respectively; the driving mechanism is configured to drive the third link to rotate; the first transmission rod and the second transmission rod pass through the base from the other side of the base and are in transmission connection with the first link and the second link, respectively.

16. The tab-through device according to claim 15, wherein
the transmission mechanism comprises an input shaft and a coupling, and the driving mechanism is provided with an output shaft; the input shaft and the output shaft are connected via the coupling, and the input shaft is in transmission connection with the linkage mechanism.

17. The tab-through device according to claim 13, wherein
the transmission mechanism comprises a gear mechanism, wherein the gear mechanism is in transmission connection with the first transmission rod and the second transmission rod, the driving mechanism is in transmission connection with the gear mechanism, and the driving mechanism is configured to drive, via the gear mechanism, the first transmission rod and the second transmission rod to rotate.

18. The tab-through device according to claim 17, wherein
the gear mechanism comprises a base, a main gear, a first driven gear, and a second driven gear, wherein the main gear, the first driven gear, and the second driven gear are arranged on one side of the base, and the first driven gear and the second driven gear mesh with each other; the driving mechanism is configured to drive the driving gear to rotate; the first transmission rod and the second transmission rod pass through the base from the other side of the base and are in transmission connection with the first driven gear and the second driven gear, respectively.

19. The tab-through device according to claim 18, wherein
the transmission mechanism comprises an input shaft and a coupling, and the driving mechanism is provided with an output shaft; the input shaft and the output shaft are connected via the coupling, and the input shaft is in transmission connection with the gear mechanism.

20. The tab-through device according to claim 12, wherein
the tab-through device comprises a flange seat, and the driving mechanism and the transmission mechanism are connected via the flange seat.

21. The tab-through device according to claim 1, wherein
a process of sleeving the housing onto the electrode assembly comprises a first stage; in the first stage, the clamping mechanism is configured to be capable of moving together with the housing relative to the electrode assembly, so as to clamp the tab part in the first stage.

22. The tab-through device according to claim 21, wherein
the process of sleeving the housing onto the electrode assembly comprises a second stage following the first stage; in the second stage, the clamping mechanism is configured to be capable of moving relative to the housing in directions away from each other while maintaining a clamping on the tab part, thereby clamping the tab part to extend out of the accommodation chamber through the through hole.

23. An assembly apparatus for a battery, comprising:
a housing-insertion device and the tab-through device according to any one of claims 1 to 22, wherein the housing-insertion device is configured to assemble the electrode assembly into the housing from an open end of the housing; the housing-insertion device comprises a housing fixing mechanism and a carrying assembly, the housing fixing mechanism is configured to fix the housing, and the carrying assembly is configured to carry the electrode assembly;
wherein the housing fixing mechanism and the tab-through device are configured to be capable of moving up and down relative to the carrying assembly, so as to correspond to moving away from or toward the carrying assembly; the tab-through device is configured to pass through the through hole into the accommodation chamber before clamping the tab part; the housing fixing mechanism is configured to sleeve the housing onto the electrode assembly; the driving mechanism is configured to drive the clamping mechanism to clamp the tab part within the accommodation chamber and to drive the clamping mechanism to guide the tab part to extend out of the accommodation chamber through the through hole.

24. An assembly method for a battery, wherein the battery comprises a housing and an electrode assembly, wherein the housing is provided with an accommodation chamber and a through hole that communicates the accommodation chamber with the outside, the electrode assembly is arranged in the accommodation chamber, and a tab part of the electrode assembly extends out of the through hole; and the assembly method comprises:
controlling a clamping mechanism to pass through the through hole and extend into the accommodation chamber, and controlling the housing to sleeve onto the electrode assembly; and
controlling, during the process of sleeving the housing onto the electrode assembly, the driving mechanism to drive the clamping mechanism to clamp the tab part within the accommodation chamber and to drive the clamping mechanism to guide the tab part to extend out of the accommodation chamber through the through hole.

25. The assembly method according to claim 24, wherein
controlling the driving mechanism to drive the clamping mechanism to clamp the tab part and to drive the clamping mechanism to guide the tab part to extend out of the accommodation chamber through the through hole comprises:
in a first stage, controlling the clamping mechanism to move together with the housing relative to the electrode assembly, so as to clamp the tab part in the first stage; and
in a second stage, controlling the clamping mechanism to move relative to the housing in directions away from each other while maintaining a clamping on the tab part, thereby clamping the tab part to extend out of the accommodation chamber through the through hole.
